(19) Europäisches Patentamt

European Patent Office

Office européen des brevets

(11) **EP 3 800 046 A1**

(12) **EUROPEAN PATENT APPLICATION**

(43) Date of publication:
**07.04.2021 Bulletin 2021/14**

(21) Application number: **20199246.8**

(22) Date of filing: **30.09.2020**

(51) Int Cl.:
**B32B 18/00** (2006.01)   **C04B 35/80** (2006.01)
**C04B 35/111** (2006.01)   **C04B 35/622** (2006.01)
**C04B 35/626** (2006.01)   **C04B 35/628** (2006.01)
**C04B 35/634** (2006.01)   **B28B 1/00** (2006.01)
**B29C 64/165** (2017.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.10.2019   JP 2019183929**
**29.11.2019   JP 2019215953**

(71) Applicant: **Ricoh Company, Ltd.**
**Tokyo 143-8555 (JP)**

(72) Inventor: **KAMODA, Kiichi**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **METHOD FOR PRODUCING THREE-DIMENSIONAL OBJECT**

(57)   A method for producing a three-dimensional object, the method including: disposing powder; disposing fibers; and applying liquid for binding the powder and the fibers to at least one selected from the group consisting of the powder and the fibers, wherein the disposing powder and the disposing fibers are forming a lamination unit of a powder layer containing the powder and a fiber layer containing the fibers, and the applying is applying liquid for binding the powder layer and the fiber layer to any region of the lamination unit.

## FIG. 1

EP 3 800 046 A1

**Description**

BACKGROUND OF THE INVENTION

Field of the Invention

The present disclosure relates to a method for producing a three-dimensional object and an apparatus for producing a three-dimensional object.

Description of the Related Art

In recent years, there have been increasing needs for small-lot production of complicated, fine three-dimensional objects. As the techniques to satisfy the needs, methods for producing a three-dimensional object have been proposed. In methods for producing a three-dimensional object, a method for producing a ceramics has also been proposed in recent years (see, for example, Japanese Unexamined Patent Application No. 2018-204105).

However, a three-dimensional object of a ceramics having a sufficient fracture toughness value has been unable to be produced.

An object of the present disclosure is to provide a method for producing a three-dimensional object improved in a fracture toughness value of a ceramics.

SUMMARY OF THE INVENTION

According to one aspect of the present disclosure, a method for producing a three-dimensional object is provided. The method includes: disposing powder; disposing fibers; and applying liquid for binding the powder and the fibers to at least one selected from the group consisting of the powder and the fibers.

According to the present disclosure, it is possible to provide a method for producing a three-dimensional object improved in a fracture toughness value of a ceramics.

BRIEF DESCRIPTION OF THE DRAWINGS

FIG. 1 is a schematic view relating to production of a three-dimensional object;
FIG. 2 is a flowchart of one example of an embodiment A1 of a method for producing a three-dimensional object;
FIG. 3 is a functional block diagram of one example of an embodiment A1 of an apparatus for producing a three-dimensional object;
FIG. 4A is a schematic view for presenting one example of an embodiment A1 of a method for producing a three-dimensional object (Part 1);
FIG. 4B is a schematic view for presenting one example of an embodiment A1 of a method for producing a three-dimensional object (Part 2);
FIG. 4C is a schematic view for presenting one example of an embodiment A1 of a method for producing a three-dimensional object (Part 3);
FIG. 4D is a schematic view for presenting one example of an embodiment A1 of a method for producing a three-dimensional object (Part 4);
FIG. 4E is a schematic view for presenting one example of an embodiment A1 of a method for producing a three-dimensional object (Part 5);
FIG. 4F is a schematic view for presenting one example of an embodiment A1 of a method for producing a three-dimensional object (Part 6);
FIG. 4G is a schematic view for presenting one example of an embodiment A1 of a method for producing a three-dimensional object (Part 7);
FIG. 4H is a schematic view for presenting one example of an embodiment A1 of a method for producing a three-dimensional object (Part 8);
FIG. 4I is a schematic view for presenting one example of an embodiment A1 of a method for producing a three-dimensional object (Part 9);
FIG. 5 is a flowchart of another example of an embodiment A1 of a method for producing a three-dimensional object;
FIG. 6 is a flowchart of another example of an embodiment A1 of a method for producing a three-dimensional object;
FIG. 7 is a functional block diagram of another example of an embodiment A1 of an apparatus for producing a three-dimensional object;

FIG. 8 is a flowchart of another example of an embodiment A1 of a method for producing a three-dimensional object;

FIG. 9 is a flowchart of one example of an embodiment A2 of a method for producing a three-dimensional object;

FIG. 10 is a functional block diagram of one example of an embodiment A2 of an apparatus for producing a three-dimensional object;

FIG. 11A is a schematic view for presenting one example of an embodiment A2 of a method for producing a three-dimensional object (Part 1);

FIG. 11B is a schematic view for presenting one example of an embodiment A2 of a method for producing a three-dimensional object (Part 2);

FIG. 11C is a schematic view for presenting one example of an embodiment A2 of a method for producing a three-dimensional object (Part 3);

FIG. 11D is a schematic view for presenting one example of an embodiment A2 of a method for producing a three-dimensional object (Part 4);

FIG. 11E is a schematic view for presenting one example of an embodiment A2 of a method for producing a three-dimensional object (Part 5);

FIG. 11F is a schematic view for presenting one example of an embodiment A2 of a method for producing a three-dimensional object (Part 6);

FIG. 11G is a schematic view for presenting one example of an embodiment A2 of a method for producing a three-dimensional object (Part 7);

FIG. 11H is a schematic view for presenting one example of an embodiment A2 of a method for producing a three-dimensional object (Part 8);

FIG. 12 is a flowchart of another example of an embodiment A2 of a method for producing a three-dimensional object;

FIG. 13 is a flowchart of another example of an embodiment A2 of a method for producing a three-dimensional object;

FIG. 14 is a functional block diagram of another example of an embodiment A2 of an apparatus for producing a three-dimensional object;

FIG. 15 is a flowchart of one example of an embodiment B1 of a method for producing a three-dimensional object;

FIG. 16 is a functional block diagram of one example of an apparatus for producing a three-dimensional object;

FIG. 17A is a schematic view for presenting one example of an embodiment B1 of a method for producing a three-dimensional object (Part 1);

FIG. 17B is a schematic view for presenting one example of an embodiment B1 of a method for producing a three-dimensional object (Part 2);

FIG. 17C is a schematic view for presenting one example of an embodiment B1 of a method for producing a three-dimensional object (Part 3);

FIG. 17D is a schematic view for presenting one example of an embodiment B1 of a method for producing a three-dimensional object (Part 4);

FIG. 17E is a schematic view for presenting one example of an embodiment B1 of a method for producing a three-dimensional object (Part 5);

FIG. 17F is a schematic view for presenting one example of an embodiment B1 of a method for producing a three-dimensional object (Part 6);

FIG. 17G is a schematic view for presenting one example of an embodiment B1 of a method for producing a three-dimensional object (Part 7);

FIG. 17H is a schematic view for presenting one example of an embodiment B1 of a method for producing a three-dimensional object (Part 8);

FIG. 17I is a schematic view for presenting one example of an embodiment B1 of a method for producing a three-dimensional object (Part 9);

FIG. 17J is a schematic view for presenting one example of an embodiment B1 of a method for producing a three-dimensional object (Part 10);

FIG. 17K is a schematic view for presenting one example of an embodiment B1 of a method for producing a three-dimensional object (Part 11);

FIG. 18 is a flowchart of one example of an embodiment B2 of a method for producing a three-dimensional object;

FIG. 19 is a flowchart of one example of an embodiment B3 of a method for producing a three-dimensional object;

FIG. 20 is a flowchart of one example of an embodiment B4 of a method for producing a three-dimensional object;

FIG. 21 is a flowchart of one example of an embodiment B5 of a method for producing a three-dimensional object;

FIG. 22 is a flowchart of one example of an embodiment B6 of a method for producing a three-dimensional object; and

FIG. 23 is a functional block diagram of another example of an apparatus for producing a three-dimensional object.

DETAILED DESCRIPTION OF THE INVENTION

(Method and apparatus for producing three-dimensional object)

A method of the present disclosure for producing a three-dimensional object includes: a step of disposing powder; a step of disposing fibers; and a step of applying liquid for binding the powder and the fibers to at least one selected from the group consisting of the powder and the fibers. The method further includes other steps if necessary.

An apparatus of the present disclosure for producing a three-dimensional object includes: a unit configured to dispose powder; a unit configured to dispose fibers; and a unit configured to apply liquid for binding the powder and the fibers to at least one selected from the group consisting of the powder and the fibers. The apparatus further includes other units if necessary.

The fracture toughness is an index indicating easiness of crack propagation; i.e., a degree of fragility. A fracture toughness value of a ceramics member produced by sintering, for example, a spherical alumina powder is about 4 ($MPa \cdot m^{1/2}$), which is considerably low considering that a fracture toughness value of a metal is about several tens.

In order to improve the fracture toughness, a method for improving the fracture toughness value by orienting fibers in a ceramics member has been proposed. For example, regarding a SiC/SiC composite material that is mounted as a member having a heat-resistant structure, a fracture toughness value of the SiC/SiC composite material is successfully improved to about 30 ($MPa \cdot m^{1/2}$) by superimposing, in a member of SiC, sheets into which SiC fibers are woven (for example, see, Effect of heat treatment on microstructure and mechanical properties of PIP-SiC/SiC composites, Materials Science and Engineering: A, Volume 559, 1 January 2013, Pages 808-811).

However, a method for laminating and sintering sheets into which fibers are woven has problems that the method is highly costly and time-consuming for production. In addition, because the sheets are required to be sintered while pressure is applied thereto during the sintering, a shape of a member that can be produced is limited.

Compared to three-dimensional modeling of a metal or resin, three-dimensional modeling of a ceramics is technically more difficult, and there are restrictions on shapes that can be modeled. Therefore, three-dimensional modeling of a ceramics is not so common under existing conditions.

The reason for the high degree of technical difficulty is because raw materials of ceramics have a higher melting point than raw materials of metals or resins, and thus it may be difficult to perform a "melting and solidifying" step to form a compact body. As a result, use of a sintering step is highly required, and it is difficult to employ a modeling method in which an energy unit such as laser is used to directly melt materials (e.g., selective laser melting (SLM) method and direct energy deposition (DED) method). Therefore, three-dimensional modeling of a ceramics has hardly been proposed at a research level.

In addition, a characteristic of low fracture toughness, which is a fundamental problem of ceramics, is one main factor that prevents three-dimensional objects of ceramics from prevailing.

In the present disclosure, a method for producing a three-dimensional object is used to introduce fibers into a ceramics. Therefore, as described above, it is possible to prevent high cost and prolonged production term and to improve a fracture toughness value of a three-dimensional object that is a ceramics.

In the method of the present disclosure for producing a three-dimensional object that is a ceramics, the three-dimensional object is obtained after raw materials of the three-dimensional object are temporarily bound. In this case, even when, for example, a resin is used for the binding, an amount of the resin to be used for the binding may be small. Therefore, volumetric shrinkage after the sintering is small. As a result, when a large structural member is produced, crack at the time of sintering can be prevented. Therefore, a model having such a dimension that is practical as a structural member can be produced.

A method of the present disclosure for producing a three-dimensional object and an apparatus of the present disclosure for producing a three-dimensional object include embodiments A and embodiments B.

First, the embodiments A in a three-dimensional object of the present disclosure will be described.

An embodiment A1 of a method of the present disclosure for producing a three-dimensional object includes a step A1-1 and a step A1-2, and further includes other steps such as a step A1-3 and a step A1-4 if necessary.

The step A1-1 is a step of forming a lamination unit of a powder layer and a fiber layer.

The step A1-2 is a step of applying liquid for binding the powder layer and the fiber layer to any region of the lamination unit.

The step A1-3 is a step of drying a precursor of a three-dimensional object containing the liquid that is obtained by performing the step A1-1 and the step A1-2, to bind the powder layer and the fiber layer.

The step A1-4 is a step of heating the precursor of the three-dimensional object dried.

An embodiment A1 of an apparatus of the present disclosure for producing a three-dimensional object includes a unit A1-1 and a unit A1-2, and further includes other units such as a unit A1-3 and a unit A1-4 if necessary.

The unit A1-1 is a unit configured to form a lamination unit of a powder layer and a fiber layer.

The unit A1-2 is a unit configured to apply liquid for binding the powder layer and the fiber layer to any region of the lamination unit.

The unit A1-3 is a unit configured to dry a precursor of a three-dimensional object containing the liquid that is obtained by using the unit A1-1 and the unit A1-2, to bind the powder layer and the fiber layer.

The unit A1-4 is a unit configured to heat the precursor of the three-dimensional object dried.

An embodiment A2 of a method of the present disclosure for producing a three-dimensional object includes a step A2-1 and a step A2-2, and further includes other steps such as a step A2-3 and a step A2-4 if necessary.

The step A2-1 is a step of applying a powder-fiber mixture of the powder and the fibers on a target surface, to form a powder-fiber mixture layer.

The step A2-2 is a step of applying, to any region of the powder-fiber mixture layer, liquid for binding at least one selected from the group consisting of between the powder and the powder, between the fibers and the fibers, and between the powder and the fibers.

The step A2-3 is a step of drying a precursor of a three-dimensional object containing the liquid that is obtained by performing the step A2-1 and the step A2-2, to bind at least one selected from the group consisting of between the powder and the powder, between the fibers and the fibers, and between the powder and the fibers.

The step A2-4 is a step of heating the precursor of the three-dimensional object dried.

An embodiment A2 of an apparatus of the present disclosure for producing a three-dimensional object includes a unit A2-1 and a unit A2-2, and further includes other units such as a unit A2-3 and a unit A2-4 if necessary.

The unit A2-1 is a unit configured to apply a powder-fiber mixture of the powder and the fibers on a target surface, to form a powder-fiber mixture layer.

The unit A2-2 is a unit configured to apply, to any region of the powder-fiber mixture layer, liquid for binding at least one selected from the group consisting of between the powder and the powder, between the fibers and the fibers, and between the powder and the fibers.

The unit A2-3 is a unit configured to dry a precursor of a three-dimensional object containing the liquid that is obtained by using the unit A2-1 and the unit A2-2, to bind at least one selected from the group consisting of between the powder and the powder, between the fibers and the fibers, and between the powder and the fibers.

The unit A2-4 is a unit configured to heat the precursor of the three-dimensional object dried.

The fracture toughness is an index indicating easiness of crack propagation; i.e., a degree of fragility. A fracture toughness value of a ceramics member produced by sintering, for example, a spherical alumina powder is about 4 ($MPa \cdot m^{1/2}$), which is considerably low considering that a fracture toughness value of a metal is about several tens. In order to improve the toughness, a method for improving the fracture toughness value by orienting fibers in a ceramics member has been proposed. For example, regarding a SiC/SiC composite material that is mounted as a member having a heat-resistant structure, a fracture toughness value of the SiC/SiC composite material is successfully improved to about 30 ($MPa \cdot m^{1/2}$) by superimposing, in a member of SiC, sheets into which SiC fibers are woven (for example, see, Effect of heat treatment on microstructure and mechanical properties of PIP-SiC/SiC composites, Materials Science and Engineering: A, Volume 559, 1 January 2013, Pages 808-811).

However, a method for laminating and sintering a sheet into which fibers are woven has problems that the method is highly costly and time-consuming for production. In addition, because the sheets are required to be sintered while pressure is applied thereto during the sintering, a shape of a member that can be produced is limited.

Compared to three-dimensional modeling of a metal or resin, three-dimensional modeling of a ceramics is technically more difficult, and there are restrictions on shapes that can be modeled. Therefore, three-dimensional modeling of a ceramics is not so common under existing conditions.

The reason for the high degree of technical difficulty is because raw materials of ceramics have a higher melting point than raw materials of metals or resins, and thus it may be difficult to perform a "melting and solidifying" step to form a compact body. As a result, use of a sintering step is highly required, and it is difficult to employ a modeling method in which an energy unit such as laser is used to directly melt materials (e.g., selective laser melting (SLM) method and direct energy deposition (DED) method). Therefore, three-dimensional modeling of a ceramics has hardly been proposed at a research level.

In addition, a characteristic of low fracture toughness, which is a fundamental problem of ceramics, is one main factor that prevents three-dimensional objects of ceramics from prevailing.

In the present disclosure, a method for producing a three-dimensional object is used to introduce fibers into a ceramics. Therefore, as described above, it is possible to prevent high cost and prolonged production term and to improve a fracture toughness value of a three-dimensional object that is a ceramics.

In the method of the present disclosure for producing a three-dimensional object that is a ceramics, the three-dimensional object is obtained after raw materials of the three-dimensional object are temporarily bound. In this case, even when, for example, a resin is used for the binding, an amount of the resin to be used for the binding may be small. Therefore, volumetric shrinkage after the sintering is small. As a result, when a large structural member is produced, crack at the time of sintering can be prevented. Therefore, a model having such a dimension that is practical as a structural member can be produced.

<Embodiment A1>

The embodiment A1 in the method for producing a three-dimensional object includes a step A1-1 and a step A1-2, and further includes other steps such as a step A1-3 and a step A1-4 if necessary.

The embodiment A1 in the apparatus for producing a three-dimensional object includes a unit A1-1 and a unit A1-2, and further includes other units such as a unit A1-3 and a unit A1-4 if necessary.

<<Step A1-1 and unit A1-1>>

The step A1-1 is not particularly limited and may be appropriately selected depending on the intended purpose, so long as it is a step (lamination unit forming step) of forming a lamination unit of a powder layer and a fiber layer.

The unit A1-1 is not particularly limited and may be appropriately selected depending on the intended purpose, so long as it is a unit (lamination unit forming unit) configured to form a lamination unit of a powder layer and a fiber layer.

The powder layer can be formed by, for example, a treatment (treatment A1-1: a powder layer forming treatment) of forming a powder layer by powder.

The powder layer can be formed by a member (member A1-1: a powder layer forming member) configured to form a powder layer by powder.

The fiber layer can be formed by, for example, a treatment (treatment 1-1: fiber layer forming treatment) of forming a fiber layer by fibers.

The fiber layer can be formed by, for example, a member (member 1-2: fiber layer forming member) configured to form a fiber layer by fibers.

In the lamination unit, the order of the powder layer and the fiber layer does not matter. That is, the lamination unit may be a lamination unit in which the fiber layer is formed on the powder layer, or may be a lamination unit in which the powder layer is formed on the fiber layer.

<<<Treatment A1-1 and member A1-1>>>

The treatment A1-1 (a powder layer forming treatment) is not particularly limited and may be appropriately selected depending on the intended purpose, so long as it is a treatment of forming the powder layer by the powder.

The member A1-1 (a powder layer forming member) is not particularly limited and may be appropriately selected depending on the intended purpose, so long as it is a member configured to form the powder layer by the powder.

When the powder layer is formed, the powder is applied, for example, on a fiber layer, on a support, or on a precursor of a three-dimensional object that has already been formed.

A method for forming the powder layer is not particularly limited and may be appropriately selected depending on the intended purpose. Examples of the method include: a method using, for example, a known counter rotating mechanism (counter roller) used in a selective laser sintering method as described in Japanese Patent No. 3607300; a method for spreading powder to form a thin film using a member such as a brush, a roller, or a blade; a method for pressing the surface of powder using a press member to spread it to a thin film; and a method using a known powder-laminating production apparatus.

When a counter rotating mechanism (counter roller), a brush or blade, a press member, or the like is used to form a powder layer formed of powder on a support, the counter rotating mechanism, the brush, the brush or blade, the press member, or the like is used to place the powder on a support that is disposed in, for example, an outer frame (may be referred to as "mold", "hollow cylinder", or "cylindrical structure") and can go up and down while the support is slid on inner walls of the outer frame, and then the powder layer is formed. At this time, when one that can move up and down is used as the support in the outer frame, it is preferable to dispose the support at a position a little bit lower than an upper opening part of the outer frame (by the thickness of a layer formed of the powder) and to place the powder on the support.

Formation of the powder layer can be automatically and easily performed using a known powder-laminating production apparatus. The powder-laminating production apparatus generally includes: a recoater configured to laminate powder material; a movable supplying tank configured to supply the powder material on a support; and a movable molding tank configured to form and laminate a layer formed of the powder material. In the powder-laminating production apparatus, the surface of the supplying tank can be raised slightly above the surface of the molding tank by raising the supplying tank, by lowering the molding tank, or by raising the supplying tank and lowering the molding tank. Therefore, the powder-laminating production apparatus can form the powder layer in which the powder material is laminated using the recoater from a side of the supplying tank, and the powder layer can be laminated by repeatedly moving the recoater.

An average thickness of the powder layer is not particularly limited and may be appropriately selected depending on the intended purpose. The average thickness per one layer is preferably 10 $\mu$m or more but 200 $\mu$m or less, more preferably 30 $\mu$m or more but 100 $\mu$m or less.

« «Powder» »

The powder includes, for example, a raw material of a ceramics.

The powder may include a resin. The resin is used for binding, for example, the powder and the fiber layer. Moreover, the resin is used, for example, for binding the powder and the powder and for binding the powder and the fibers.

Here, the raw material of the ceramics is, for example, a main component of the powder. The main component means that the powder includes more than 50% by mass of the ceramics. An amount of the ceramics in the powder is preferably 80% by mass or more, more preferably 90% by mass or more.

-Raw material of ceramics-

The ceramics means a sintered body obtained by subjecting an inorganic substance to a heating treatment, followed by sintering.

Examples of the raw material of ceramics include glass particles, metal oxide particles, metal carbide particles, and metal nitride particles.

Examples of the metal oxide particles include zirconia particles, alumina particles, and mullite (aluminosilicate mineral) particles.

Examples of the metal carbide particles include silicon carbide particles and tungsten carbide particles.

Examples of the metal nitride particles include silicon nitride particles and aluminum nitride particles.

These may be used alone or in combination.

Among them, zirconia particles, alumina particles, mullite (aluminosilicate mineral) particles, tungsten carbide particles, silicon carbide particles, and silicon nitride particles are preferable in order to maintain strength at high temperatures.

-Resin-

The resin included in the powder contributes to, for example, binding the powder layer and the fiber layer, binding the powder and the powder, and binding the powder and the fibers.

The kind of resin is not particularly limited and may be appropriately selected depending on the intended purpose. Examples thereof include acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, $\alpha$-olefin/maleic anhydride-based copolymer, esterified substances of a-olefin/maleic anhydride-based copolymer, polystyrene, poly(meth)acrylic acid ester, $\alpha$-olefin/maleic anhydride/vinyl group-containing monomer copolymer, styrene/maleic anhydride copolymer, styrene/(meth)acrylic acid ester copolymer, polyamide, epoxy resins, xylene resins, ketone resins, petroleum resins, rosin or its derivatives, coumarone indene resins, terpene resins, polyurethane resins, synthetic rubbers such as styrene/butadiene rubber, polyvinyl butyral, nitrile rubber, acryl rubber, and ethylene/propylene rubber, and nitrocellulose.

When the powder includes a resin, the resin in the powder is preferably disposed on the surface of the raw material of the ceramics, and the resin preferably covers the surface of the raw material of the ceramics. Here, regarding the term "cover", the resin does not need to cover 100% of the surface.

For example, the resin in the powder exists in the form of a film on the surface of the raw material of the ceramics.

A method for disposing the resin in the powder on the surface of the raw material of the ceramics is not particularly limited and may be appropriately selected depending on the intended purpose. Examples of the method include the dry coating method and the wet coating method.

When the powder contains the resin, an amount of the resin in the powder is not particularly limited and may be appropriately selected depending on the intended purpose. The amount is preferably 0.1% by mass or more but 20% by mass or less, more preferably 1% by mass or more but 10% by mass or less, in order to prevent cracks of a produced product, formation of defects, and deformation.

<<<Treatment A1-2 and member A1-2>>>

A treatment A1-2 (fiber layer forming treatment) is not particularly limited and may be appropriately selected depending on the intended purpose, so long as it is a treatment of forming a fiber layer by fibers.

A member A1-2 (fiber layer forming member) is not particularly limited and may be appropriately selected depending on the intended purpose, so long as it is a member that forms a fiber layer by fibers.

When the fiber layer is formed, the fibers are applied, for example, on a powder layer, on a support, or on a precursor of a three-dimensional object that has already been formed.

The fiber layer needs not to be a layer in which the fibers are densely packed. For example, the fiber layer includes a gap between a plurality of fibers. The density of the fiber layer may be such a degree that when the fiber layer is seen from one surface of the fiber layer, another surface of the fiber layer can be seen from the gap between the plurality of fibers.

The fiber layer is preferably formed by applying fibers on a target surface using a non-contact member that does not come into contact with the target surface.

That is, the treatment A1-2 (fiber layer forming treatment) is preferably a treatment of applying fibers on a target surface using a non-contact member that does not come into contact with the target surface.

The member A1-2 (fiber layer forming member) is preferably a member configured to apply fibers on a target surface using a non-contact member that does not come into contact with the target surface.

Note that, when the lamination unit is a lamination unit where the fiber layer is formed on the powder layer, the target surface is a surface of the powder layer. When the lamination unit is a lamination unit where the powder layer is formed on the fiber layer, the target surface is a surface of the support or a surface of the precursor of the three-dimensional object that has already been formed.

Use of the non-contact member can prevent the fibers from being broken. As a result, an effect of improving a fracture toughness value of a ceramics by the fibers is more excellent.

An amount of the fiber layer in the lamination unit is not particularly limited and may be appropriately selected depending on the intended purpose. The amount of the fiber layer in the lamination unit is preferably 5% by mass or more but 70% by mass or less, more preferably 30% by mass or more but 60% by mass or less, relative to the lamination unit. When the amount is 5% by mass or more, an effect of improving the fracture toughness value is more excellent. When the amount is 70% by mass or less, the density of the three-dimensional object becomes high, resulting in high strength.

The treatment A1-2 can be performed as follows, for example.

The following method is effective. Specifically, in order to allow fibers to fall on a target surface in a non-contact manner from an upper part (e.g., a position apart from the target surface by about 10 mm) above the target surface, a member (non-contact member) provided with mesh such as a metal sieve, which can allow the fiber to pass, is disposed above the target surface, and the fibers are allowed to fall on the member.

In order to facilitate passage of the fibers through a mesh, the mesh may be vibrated, or the fibers may be pressed against the mesh using a brush member or roller member. Such a treatment is useful in order to improve a molding speed or to control an amount of the fibers disposed.

When fibers are disposed on a target surface while a direction of the fibers is aligned by imparting anisotropy to a shape of the mesh, a product in which the fibers are oriented can be obtained. The fracture toughness value of a ceramics is improved by including the fibers and is greatly improved by orienting the fibers. The fracture toughness value of a ceramics can be adjusted by adjusting a degree of orientation of the fibers per one laminated layer or by adjusting a direction of the orientation per one laminated layer.

Moreover, an electrostatic force may be used in order to prevent scattering when the fibers are allowed to fall. When a potential difference is generated between a mesh and a target surface to generate an electric field, fibers having the same positive and negative electric charges as the mesh enter the electric field. Then, the fibers move easily at a side of the target surface, and are densely attached to the target surface. This method is called an electrostatic screen technique, and is one method for transferring powder material to a member. This method is significantly compatible with the present disclosure.

<<<<Fibers>>>>

The fibers include, for example, an inorganic material.

The fibers may include a resin. The resin is used for binding, for example, the powder layer and the fiber layer. Moreover, the resin is used for, for example, binding the fibers and the fibers or binding the powder and the fibers.

Here, the fibers mean a substance having a thin and long shape such as an acicular shape, a bar shape, and a fibrous shape.

The inorganic material is, for example, a main component of the fibers. The main component means that the fibers include more than 50% by mass of the inorganic material. An amount of the inorganic material in the fibers is preferably 80% by mass or more, more preferably 90% by mass or more.

In the fibers, all the materials contained in the fibers do not need to have a thin and long shape such as an acicular shape, a bar shape, and a fibrous shape, so long as the inorganic material as a main component may have at least a thin and long shape such as an acicular shape, a bar shape, and a fibrous shape.

-Inorganic material-

The inorganic material has a thin and long shape such as an acicular shape, a bar shape, and a fibrous shape.

Examples of the inorganic material include glass, metal oxide, metal carbide, and metal nitride.

Examples of the metal oxide include zirconia, alumina, and mullite (aluminosilicate mineral).

Examples of the metal carbide include silicon carbide and tungsten carbide. Examples of the metal nitride include silicon nitride and aluminum nitride. These may be used alone or in combination.

Among them, silicon carbide, alumina, and mullite are preferable in terms of specific strength at high temperatures and resistance to environment.

As the inorganic material, a material that has been subjected to heat resistant coating with, for example, boron nitride or carbon as a pretreatment may be used.

-Resin-

The resin included in the fibers contributes to, for example, binding the powder layer and the fiber layer, binding the fibers and the fibers, and binding the powder and the fibers.

The kind of resin is not particularly limited and may be appropriately selected depending on the intended purpose. Examples thereof include acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, $\alpha$-olefin/maleic anhydride-based copolymer, esterified substances of a-olefin/maleic anhydride-based copolymer, polystyrene, poly(meth)acrylic acid ester, $\alpha$-olefin/maleic anhydride/vinyl group-containing monomer copolymer, styrene/maleic anhydride copolymer, styrene/(meth) acrylic acid ester copolymer, polyamide, epoxy resins, xylene resins, ketone resins, petroleum resins, rosin or its derivatives, coumarone indene resins, terpene resins, polyurethane resins, synthetic rubbers such as styrene/butadiene rubber, polyvinyl butyral, nitrile rubber, acryl rubber, and ethylene/propylene rubber, and nitrocellulose.

The resin included in the fiber may be the same resin as the resin included in the powder or may be different from the resin included in the powder. However, the resin is preferably the same resin as the resin included in the powder because the powder layer and the fiber layer, and the powder and the fibers are bound more strongly.

When the fibers include a resin, the resin in the fibers is preferably disposed on the surface of a fibrous inorganic material, and the resin preferably covers the surface of the inorganic material. Here, regarding the term "cover", the resin does not need to cover 100% of the surface.

For example, the resin in the fibers exists in the form of a film on the surface of the inorganic material.

A method for disposing the resin in the fibers on the surface of the inorganic material is not particularly limited and may be appropriately selected depending on the intended purpose. Examples of the method include the dry coating method and the wet coating method.

When the fibers include the resin, an amount of the resin in the fibers is not particularly limited and may be appropriately selected depending on the intended purpose. The amount is preferably 0.1% by mass or more but 20% by mass or less, more preferably 1% by mass or more but 10% by mass or less, in order to prevent cracks of a produced product, formation of defects, and deformation.

<<Step A1-2 and unit A1-2>>

A step A1-2 is not particularly limited and may be appropriately selected depending on the intended purpose, so long as it is a step (liquid applying step) of applying liquid for binding a powder layer and a fiber layer to any region of a lamination unit.

A unit A1-2 is not particularly limited and may be appropriately selected depending on the intended purpose, so long as it is a unit (liquid applying unit) configured to apply liquid for binding a powder layer and a fiber layer to any region of a lamination unit.

Any region is, for example, a region where the three-dimensional object is finally to be formed.

The powder layer and the fiber layer are preferably bound via a resin.

The resin used for binding the powder layer and the fiber layer is contained in a lamination unit before drying. The resin may be contained in the powder and the fibers or may be contained in the liquid.

In the case where at least one of the powder and the fibers includes a resin used for binding the powder layer and the fiber layer, when liquid is applied to any region of the lamination unit, the resin included in at least one of the powder and the fibers is dissolved by the liquid. Then, when drying is performed to remove a volatile component (e.g., solvent) in the liquid, the powder layer and the fiber layer are bound via the resin. At this time, at least one of between the powder and the powder, between the fibers and the fibers, and between the powder and the fibers is bound.

Meanwhile, in the case where the liquid contains the resin used for binding the powder layer and the fiber layer, when the liquid is applied to any region of a lamination unit, the liquid enters a gap in the powder, a gap in the fiber layer, and an interface between the powder layer and the fiber layer. Then, when drying is performed to remove a volatile component (e.g., solvent) in the liquid, the powder layer and the fiber layer are bound via the resin. The liquid enters at least one of a gap between the powder and the powder, a gap between the fibers and the fibers, and a gap between the powder and the fibers. Then, when drying is performed to remove a volatile component (e.g., solvent) in the liquid, at least one of between the powder and the powder, between the fibers and the fibers, and between the powder and the fibers is bound via the resin.

Examples of a method for applying the liquid to any region of the lamination unit include the dispenser method, the spray method, and the inkjet method. In order to perform these methods, a known device can be suitably used as a second unit.

Among them, the dispenser method is excellent in a quantitative property of liquid droplets, but a coating area obtained by the dispenser method is small. The spray method can easily form a fine discharged object, can achieve a large coating area, and is excellent in a coating property. However, its quantitative property of liquid droplets is bad, and scattered powder material occurs by a spray flow.

Therefore, the inkjet method is particularly preferable. The inkjet method is advantageous because the quantitative property of liquid droplets is better than the spray method and the coating area can be larger than the dispenser method. The inkjet method is preferable because it can accurately and efficiently form a complex three-dimensional object.

In the case of the inkjet method, the second unit includes a nozzle that can apply liquid to any region of the lamination unit by the inkjet method. Here, as the nozzle, a nozzle (discharge head) in a known inkjet printer can be suitably used, and the inkjet printer can be suitably used as the second unit. Suitable examples of the inkjet printer include SG7100 available from Ricoh Company, Ltd. The inkjet printer is preferable because an amount of liquid that can be discharged at one time from a head part is large, the coating area is large, and the coating can be performed rapidly.

<<<Liquid>>>

The liquid is not particularly limited and may be appropriately selected depending on the intended purpose, so long as it is liquid for binding the powder layer and the fiber layer.

The liquid includes, for example, a solvent, and includes other components such as a resin if necessary.

For example, when the resin used for binding the powder layer and the fiber layer is included in at least one of the powder and the fibers, the liquid may include a resin, or may not include a resin.

-Solvent-

The solvent is not particularly limited and may be appropriately selected depending on the intended purpose. Preferable examples of the solvent include alcohols having 2 or more but 7 or less carbon atoms, ketones having 3 or more but 8 or less carbon atoms, cyclic ether, and polyether.

Examples of the alcohols having 2 or more but 7 or less carbon atoms include ethyl alcohol, isopropanol, and n-butanol.

Examples of the ketones having 3 or more but 8 or less carbon atoms include acetone and ethyl methyl ketone.

Examples of the cyclic ether include tetrahydrofuran.

Examples of the polyether include dimethoxyethanol and dimethoxy diethylene glycol.

These may be used alone or in combination.

An amount of the solvent in the liquid is not particularly limited and may be appropriately selected depending on the intended purpose.

When the liquid includes a resin, an amount of the solvent in the liquid is preferably 60% by mass or more but 95% by mass or less, more preferably 70% by mass or more but 90% by mass or less.

When the liquid does not include a resin, an amount of the solvent in the liquid is preferably 50% by mass or more but 99% by mass or less, more preferably 70% by mass or more but 90% by mass or less.

An amount of water in the liquid is preferably small. The amount of water in the liquid is preferably less than 45% by mass, more preferably less than 5% by mass.

-Resin-

The resin contributes to, for example, binding the powder layer and the fiber layer, binding the powder and the powder, binding the fibers and the fibers, and binding the powder and the fibers.

The resin is not particularly limited and may be appropriately selected depending on the intended purpose. Examples thereof include acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, $\alpha$-olefin/maleic anhydride-based copolymer, esterified substances of $\alpha$-olefin/maleic anhydride-based copolymer, polystyrene, poly(meth)acrylic acid ester, $\alpha$-olefin/maleic anhydride/vinyl group-containing monomer copolymer, styrene/maleic anhydride copolymer, styrene/(meth)acrylic acid ester copolymer, polyamide, epoxy resins, xylene resins, ketone resins, petroleum resins, rosin or its derivatives, coumarone indene resins, terpene resins, polyurethane resins, synthetic rubbers such as styrene/butadiene rubber, polyvinyl butyral, nitrile rubber, acryl rubber, and ethylene/propylene rubber, and nitrocellulose.

The resin may be a polymer compound of an organic metal or an organic matter having a low hydrophilicity.

When the liquid includes the resin, an amount of the resin in the liquid is not particularly limited and may be appropriately selected depending on the intended purpose. The amount is preferably 5% by mass or more but 40% by mass or less, more preferably 10% by mass or more but 30% by mass or less, in order to control viscosity of the liquid to a predetermined range.

-Other components-

Examples of the other components include inorganic particles.

--Inorganic particles--

The liquid may include inorganic particles that have such a particle diameter that does not cause clogging in a nozzle. By inclusion of inorganic particles in the liquid, the inorganic particles are disposed in a gap between the powders in the lamination unit when the liquid is applied to the lamination unit. As a result, density of the obtained three-dimensional object is improved.

Examples of a material of the inorganic particles include glass, metal oxide, metal carbide, and metal nitride.

Examples of the metal oxide include zirconia, alumina, and mullite (aluminosilicate mineral).

Examples of the metal carbide include silicon carbide and tungsten carbide.

Examples of the metal nitride include silicon nitride and aluminum nitride.

These may be used alone or in combination.

A material of the inorganic particles is preferably the same material as the material of the raw material of the ceramics.

A volume average particle diameter of the inorganic particles is not particularly limited and may be appropriately selected depending on the intended purpose, so long as it is smaller than a particle diameter of the raw material of the ceramics. The volume average particle diameter is preferably 1 nm or more but 5 $\mu$m or less.

The volume average particle diameter can be measured by, for example, the laser diffraction-scattering method.

An amount of the inorganic particles in the liquid is not particularly limited and may be appropriately selected depending on the intended purpose. The amount is preferably 5% by mass or more but 60% by mass or less, more preferably 15% by mass or more but 50% by mass or less.

<<Step A1-3 and unit A1-3>>

A step A1-3 is not particularly limited and may be appropriately selected depending on the intended purpose, so long as it is a step (binding step) of drying a precursor of a three-dimensional object containing the liquid that is obtained by performing the step A1-1 and the step A1-2, to bind the powder layer and the fiber layer. For example, a known dryer may be used.

A unit A1-3 is not particularly limited and may be appropriately selected depending on the intended purpose, so long as it is a unit (binding unit) configured to dry a precursor of a three-dimensional object containing the liquid that is obtained by using the unit A1-1 and the unit A1-2, to bind the powder layer and the fiber layer. Examples thereof include known dryers.

In the step A1-3, the precursor of the three-dimensional object containing the liquid is dried. At this time, a solvent in the liquid is volatilized to solidify the resin dissolved in the solvent, and the powder layer and the fiber layer are bound via the resin.

The step A1-3 may be performed on the precursor of the three-dimensional object obtained by undergoing one circle of the step A1-1 and the step A1-2. In this case, it can be said that the precursor of the three-dimensional object is, for example, a lamination unit itself. In this case, for example, the step A1-3 is performed per one cycle of the step A1-1 and the step A1-2.

Moreover, the step A1-3 may be performed on the precursor of the three-dimensional object obtained by repeating the step A1-1 and the step A1-2. In this case, it can be said that the precursor of the three-dimensional object is a lamination structure obtained by laminating a plurality of lamination units.

A drying temperature is not particularly limited and may be appropriately selected depending on the intended purpose. The drying temperature is preferably 50°C or more but 200°C or less.

A drying time is not particularly limited and may be appropriately selected depending on the intended purpose. The drying time is preferably 1 hour or more but 48 hours or less.

When a boiling point of the volatile component contained in the liquid is low or when volatility of the volatile component contained in the liquid is high, the step A1-3 may be air drying. That is, the step A1-3 may be a step of leaving the precursor of the three-dimensional object containing the liquid to stand, to dry the precursor of the three-dimensional object containing the liquid.

<<Step A1-4 and unit A1-4>>

A step A1-4 is not particularly limited and may be appropriately selected depending on the intended purpose, so long as it is a step (heating step) of heating the precursor of the three-dimensional object dried. For example, the step A1-4 may be performed using, for example, a known heating device.

The unit A1-4 is not particularly limited and may be appropriately selected depending on the intended purpose, so long as it is a unit (heating unit) configured to heat the precursor of the three-dimensional object dried. Examples of the unit A1-4 include known heating devices.

In one aspect, the heating in the step A1-4 and the unit A1-4 is heating for sintering the precursor of the three-dimensional object.

In another aspect, the heating in the step A1-4 and the unit A1-4 functions as decomposition and removal of the resin and sintering of the precursor of the three-dimensional object.

In the heating, the decomposition and removal of the resin and the sintering of the precursor of the three-dimensional object may be performed at one time or may be separately performed. It is preferable to perform the decomposition and removal of the resin and the sintering of the precursor of the three-dimensional object at one time because steps can be shortened.

When the decomposition and removal of the resin and the sintering of the precursor of the three-dimensional object are performed at one time, the following procedure may be employed. Specifically, for example, a precursor of a three-dimensional object is heated to a temperature at which the resin can be decomposed and removed, followed by retaining the temperature for a certain time. After the resin is decomposed to remove the resin from the precursor of the three-dimensional object, the precursor of the three-dimensional object is heated to a sintering temperature of the raw material of the ceramics used, to sinter the precursor of the three-dimensional object.

When the decomposition and removal of the resin and the sintering of the precursor of the three-dimensional object are separately performed, the following procedure may be employed. Specifically, for example, a precursor of a three-dimensional object is heated to a temperature at which the resin can be decomposed and removed, followed by retaining the temperature for a certain time. After the resin is decomposed to remove the resin from the precursor of the three-dimensional object, the resultant is temporarily cooled (e.g., standing to cool). Then, the precursor of the three-dimensional object is heated to a sintering temperature of the raw material of the ceramics used, to sinter the precursor of the three-dimensional object. That is, the sintering treatment is performed after the resin decomposition treatment.

An atmosphere in the heating for decomposing and removing the resin is not particularly limited and may be appropriately selected depending on the intended purpose. Examples of the atmosphere include inert atmospheres (e.g., nitrogen atmosphere and argon atmosphere).

A heating temperature and heating time for decomposing and removing the resin are not particularly limited and may be appropriately selected depending on the intended purpose, so long as the heating temperature is a temperature at which the resin can be decomposed and removed, and the heating time is time for which the resin can be decomposed and removed. The heating temperature is, for example, 150°C or more but 700°C or less, and the heating time is, for example, 0.5 hours or more but 24 hours or less.

The atmosphere in the sintering is not particularly limited and may be appropriately selected depending on the intended purpose. Examples of the atmosphere include inert atmospheres (e.g., nitrogen atmosphere and argon atmosphere).

A heating temperature and heating time for the sintering are not particularly limited and may be appropriately selected depending on the intended purpose, so long as the heating temperature is a temperature at which sintering can be performed and the heating time is time for which sintering can be performed. The heating temperature is, for example, 800°C or more but 2000°C or less, and the heating time is, for example, 0.5 hours or more but 12 hours or less.

«Other steps and other units»

As a step A1-5, a step of removing an unnecessary powder layer and an unnecessary fiber layer may be performed between the step A1-3 and the step A1-4.

The embodiment A1 of the apparatus for producing a three-dimensional object may include, as a unit A1-5, a unit configured to remove an unnecessary powder layer and an unnecessary fiber layer.

Examples of the step A1-5 include a step of removing the unnecessary powder layer and the unnecessary fiber layer attached around the precursor of the three-dimensional object using, for example, an air spray or a brush.

Examples of the unit A1-5 include an air spray and a brush.

<Embodiment A2>

An embodiment A2 of the method of the present disclosure for producing a three-dimensional object includes a step A2-1 and a step A2-2, and further includes other steps such as a step A2-3 and a step A2-4 if necessary.
An embodiment A2 of the apparatus of the present disclosure for producing a three-dimensional object includes a unit A2-1 and a unit A2-2, and further includes other units such as a unit A2-3 and a unit A2-4 if necessary.

<<Step A2-1 and unit A2-1>>

The step A2-1 is not particularly limited and may be appropriately selected depending on the intended purpose, so long as it is a step (powder-fiber mixture layer forming step) of applying a powder-fiber mixture of the powder and the fibers on a target surface, to form a powder-fiber mixture layer.
The unit A2-1 is not particularly limited and may be appropriately selected depending on the intended purpose, so long as it is a unit (powder-fiber mixture layer forming unit) configured to apply a powder-fiber mixture of the powder and the fibers on a target surface, to form a powder-fiber mixture layer.
The target surface is, for example, a surface of a support or a surface of a precursor of a three-dimensional object that has already been formed.
A method for forming the powder-fiber mixture layer is not particularly limited and may be appropriately selected depending on the intended purpose. Examples of the method include: a method using, for example, a known counter rotating mechanism (counter roller) used in a selective laser sintering method as described in Japanese Patent No. 3607300; a method for spreading powder to form a thin film using a member such as a brush, a roller, or a blade; a method for pressing the surface of a powder-fiber mixture using a press member to spread it to a thin film; and a method using a known powder-laminating production apparatus.
The step A2-1 is preferably a step of applying a powder-fiber mixture on a target surface using a non-contact member that does not come into contact with the target surface.
The unit A2-1 is preferably a unit configured to apply a powder-fiber mixture on a target surface using a non-contact member that does not come into contact with the target surface.
Use of the non-contact member can prevent the fibers from being broken. As a result, an effect of improving a fracture toughness value of a ceramics by the fibers is more excellent.
An average thickness of the powder-fiber mixture layer is not particularly limited and may be appropriately selected depending on the intended purpose. The average thickness per one layer is preferably 10 $\mu$m or more but 200 $\mu$m or less, more preferably 30 $\mu$m or more but 100 $\mu$m or less.
The step A2-1 can be performed as follows, for example.
The following treatment is effective. Specifically, in order to allow a powder-fiber mixture containing fibers to fall on a target surface in a non-contact manner from an upper part (e.g., a position apart from the target surface by about 10 mm) above the target surface, a member (non-contact member) provided with mesh such as a metal sieve, which can allow the fibers powder to pass, is disposed above the target surface, and the powder-fiber mixture is allowed to fall on the member.
In order to facilitate passage of the fibers through a mesh, the mesh may be vibrated, or the fibers may be pressed against the mesh using a brush member or a roller member. Such a treatment is useful in order to improve a molding speed or to control an amount of the fibers disposed.
When fibers are disposed on a target surface while a direction of the fibers is aligned by imparting anisotropy to a shape of the mesh, a product in which the fibers are oriented can be obtained. The fracture toughness value of a ceramics is improved by including the fibers and is greatly improved by orienting the fibers. The fracture toughness value of a ceramics can be adjusted by adjusting a degree of orientation of the fibers or by adjusting a direction of the orientation per one laminated layer.
Moreover, an electrostatic force may be used in order to prevent scattering when the powder-fiber mixture containing fibers is allowed to fall. When a potential difference is generated between a mesh and a target surface to generate an electric field, fibers having the same positive and negative electric charges as the mesh enter the electric field. Then, the fibers move easily at a side of the target surface, and are densely attached to the target surface. This method is called an electrostatic screen technique, and is one method for transferring powder material to a member. This method is significantly compatible with the present disclosure.

<<<Powder-fiber mixture>>>

The powder-fiber mixture includes powder and fibers, and further includes other components such as a resin if necessary.

The powder-fiber mixture is obtained by mixing, for example, powder and fibers. The mixing method is not particularly limited and may be appropriately selected depending on the intended purpose.

An amount of the fibers in the powder-fiber mixture is not particularly limited and may be appropriately selected depending on the intended purpose. The amount of the fibers is preferably 15% by mass or more but 90% by mass or less, more preferably 30% by mass or more but 70% by mass or less, relative to the powder-fiber mixture. When the amount is 15% by mass or more, an effect of improving the fracture toughness value is more excellent. When the amount is 90% by mass or less, the density of a three-dimensional object becomes high, resulting in high intensity.

-Powder-

The powder includes a raw material of a ceramics.

The powder may include a resin. The resin is used, for example, for binding the powder and the powder and for binding the powder and the fibers.

Here, the raw material of the ceramics is, for example, a main component of the powder. The main component means that the powder includes more than 50% by mass of the ceramics. An amount of the ceramics in the powder is preferably 80% by mass or more, more preferably 90% by mass or more.

--Raw material of ceramics--

The ceramics means a sintered body obtained by subjecting an inorganic substance to a heating treatment, followed by sintering.

Examples of the raw material of ceramics include glass particles, metal oxide particles, metal carbide particles, and metal nitride particles.

Examples of the metal oxide particles include zirconia particles, alumina particles, and mullite (aluminosilicate mineral) particles.

Examples of the metal carbide particles include silicon carbide particles and tungsten carbide particles.

Examples of the metal nitride particles include silicon nitride particle.

These may be used alone or in combination.

Among them, zirconia particles, alumina particles, mullite (aluminosilicate mineral) particles, tungsten carbide particles, silicon carbide particles, and silicon nitride particles are preferable in order to maintain strength at high temperatures.

Fibers-

The fibers include, for example, an inorganic material.

The fibers may include a resin. The resin is used for, for example, binding the fibers and the fibers, and binding the powder and the fibers.

Here, the fibers mean a substance having a thin and long shape such as an acicular shape, a bar shape, and a fibrous shape.

The inorganic material is, for example, a main component of the fibers. Here, the main component means that the fibers include more than 50% by mass of the inorganic material. An amount of the inorganic material in the fibers is preferably 80% by mass or more, more preferably 90% by mass or more.

In the fibers, all the materials contained in the fibers do not need to have a thin and long shape such as an acicular shape, a bar shape, and a fibrous shape, so long as the inorganic material that is a main component may have at least a thin and long shape such as an acicular shape, a bar shape, and a fibrous shape.

--Inorganic material--

The inorganic material has a thin and long shape such as an acicular shape, a bar shape, and a fibrous shape.

Examples of a material of the inorganic material include glass, metal oxide, metal carbide, and metal nitride.

Examples of the metal oxide include zirconia, alumina, and mullite (aluminosilicate mineral).

Examples of the metal carbide include silicon carbide and tungsten carbide.

Examples of the metal nitride include silicon nitride and aluminum nitride.

These may be used alone or in combination.

Among them, silicon carbide, alumina, and mullite are preferable in terms of specific strength at high temperatures and resistance to environment.

As the inorganic material, a material that has been subjected to heat resistant coating with, for example, boron nitride or carbon as a pretreatment may be used.

-Resin-

The powder-fiber mixture may include a resin.

The resin included in the powder-fiber mixture contributes to at least one of binding the powder and the powder, binding the fibers and the fibers, and binding the powder and the fibers.

The resin may be included in the powder, or may be included in the fibers.

The resin included in the powder contributes to binding the powder and the powder and binding the powder and the fibers.

The resin included in the fibers contributes to binding the fibers and the fibers and binding the powder and the fibers.

The kind of resin is not particularly limited and may be appropriately selected depending on the intended purpose, so long as it can contribute to at least one selected from the group consisting of binding the powder and the powders, binding the fibers and the fibers, and binding the powder and the fibers. Examples of the resin include acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, $\alpha$-olefin/maleic anhydride-based copolymer, esterified substances of $\alpha$-olefin/maleic anhydride-based copolymer, polystyrene, poly(meth)acrylic acid ester, $\alpha$-olefin/maleic anhydride/vinyl group-containing monomer copolymer, styrene/maleic anhydride copolymer, styrene/(meth)acrylic acid ester copolymer, polyamide, epoxy resins, xylene resins, ketone resins, petroleum resins, rosin or its derivatives, coumarone indene resins, terpene resins, polyurethane resins, synthetic rubbers such as styrene/butadiene rubber, polyvinyl butyral, nitrile rubber, acryl rubber, and ethylene/propylene rubber, and nitrocellulose.

When the powder includes a resin, the resin in the powder is preferably disposed on the surface of the raw material of the ceramics, and the resin preferably covers the surface of the raw material of the ceramics. Here, regarding the term "cover", the resin does not need to cover 100% of the surface.

For example, the resin in the powder exists in the form of a film on the surface of the raw material of the ceramics.

When the fibers include a resin, the resin in the fibers is preferably disposed on the surface of a fibrous inorganic material, and the resin preferably covers the surface of the inorganic material. Here, regarding the term "cover", the resin does not need to cover 100% of the surface.

For example, the resin in the fibers exists on the surface of the inorganic material in the form of a film.

A method for disposing the resin on the surface of the raw material of the ceramics or the inorganic material is not particularly limited and may be appropriately selected depending on the intended purpose. Examples of the method include the dry coating method and the wet coating method.

When the powder-fiber mixture contains the resin, an amount of the resin in the powder-fiber mixture is not particularly limited and may be appropriately selected depending on the intended purpose. The amount is preferably 0.1% by mass or more but 20% by mass or less, more preferably 1% by mass or more but 10% by mass or less, in order to prevent cracks of a produced product, formation of defects, and deformation.

«Step A2-2 and unit A2-2»

The step A2-2 is not particularly limited and may be appropriately selected depending on the intended purpose, so long as it is a step (liquid applying step) of applying, to any region of the powder-fiber mixture layer, liquid for binding at least one of between the powder and the powder, between the fibers and the fibers, and between the powder and the fibers.

The unit A2-2 is not particularly limited and may be appropriately selected depending on the intended purpose, so long as it is a unit (liquid applying unit) configured to apply, to any region of the powder-fiber mixture layer, liquid for binding at least one of between the powder and the powder, between the fibers and the fibers, and between the powder and the fibers.

Any region is, for example, a region where the three-dimensional object is finally to be formed.

At least one of between the powder and the powder, between the fibers and the fibers, and between the powder and the fibers is preferably bound via a resin.

The resin used for binding at least one of between the powder and the powder, between the fibers and the fibers, and between the powder and the fibers may be included in the powder-fiber mixture or may be included in the liquid.

In the case where the powder-fiber mixture includes a resin used for binding between the powder and the powder, between the fibers and the fibers, and between the powder and the fibers, when the liquid is applied to any region of the powder-fiber mixture layer, the resin included in the powder-fiber mixture layer is dissolved by the liquid. Then, when drying is performed to remove a volatile component (e.g., solvent) in the liquid, at least one of between the powder and the powder, between the fibers and the fibers, and between the powder and the fibers is bound via the resin.

Meanwhile, in the case where the liquid includes a resin used for binding at least one of between the powder and the powder, between the fibers and the fibers, and between the powder and the fibers, when the liquid is applied to any region of the powder-fiber mixture layer, the liquid enters at least one of a gap between the powder and the powder, a gap between the fibers and the fibers, and a gap between the powder and the fibers. Then, when drying is performed to remove a volatile component (e.g., solvent) in the liquid, at least one of between the powder and the powder, between the fibers and the fibers, and between the powder and the fibers is bound via the resin.

Examples of a method for applying the liquid to any region of the powder-fiber mixture layer include the dispenser method, the spray method, and the inkjet method. In order to perform these methods, a known device can be suitably used as a unit B.

Among them, the dispenser method is excellent in a quantitative property of liquid droplets, but a coating area obtained by the dispenser method is small. The spray method can easily form a fine discharged object, can achieve a large coating area, and is excellent in a coating property. However, its quantitative property of liquid droplets is bad, and scattered powder material occurs by a spray flow.

Therefore, the inkjet method is particularly preferable. The inkjet method is advantageous because the quantitative property of liquid droplets is better than the spray method and the coating area can be larger than the dispenser method. The inkjet method is preferable because it can accurately and efficiently form a complex three-dimensional object.

In the case of the inkjet method, the unit B includes a nozzle that can apply liquid to any region of the powder-fiber mixture layer by the inkjet method. Here, as the nozzle, a nozzle (discharge head) in a known inkjet printer can be suitably used, and the inkjet printer can be suitably used as the unit B. Suitable examples of the inkjet printer include SG7100 available from Ricoh Company, Ltd. The inkjet printer is preferable because an amount of liquid that can be discharged at one time from a head part is large, the coating area is large, and the coating can be performed rapidly.

<<<Liquid>>>

The liquid is not particularly limited and may be appropriately selected depending on the intended purpose, so long as it is liquid for binding at least one of between the powder and the powder, between the fibers and the fibers, and between the powder and the fibers.

The liquid includes, for example, a solvent, and further includes other components such as a resin if necessary.

For example, when the resin used for binding at least one of between the powder and the powder, between the fibers and the fibers, and between the powder and the fibers is included in at least one of the powder and the fibers, the liquid may include a resin or may not include a resin.

-Solvent-

The solvent is not particularly limited and may be appropriately selected depending on the intended purpose. Preferable examples of the solvent include alcohols having 2 or more but 7 or less carbon atoms, ketones having 3 or more but 8 or less carbon atoms, cyclic ether, and polyether.

Examples of the alcohols having 2 or more but 7 or less carbon atoms include ethyl alcohol, isopropanol, and n-butanol.

Examples of the ketones having 3 or more but 8 or less carbon atoms include acetone and ethyl methyl ketone.

Examples of the cyclic ether include tetrahydrofuran.

Examples of the polyether include dimethoxyethanol and dimethoxy diethylene glycol.

These may be used alone or in combination.

An amount of the solvent in the liquid is not particularly limited and may be appropriately selected depending on the intended purpose.

When the liquid includes a resin, an amount of the solvent in the liquid is preferably 60% by mass or more but 95% by mass or less, more preferably 70% by mass or more but 90% by mass or less.

When the liquid does not include a resin, an amount of the solvent in the liquid is preferably 50% by mass or more but 99% by mass or less, more preferably 70% by mass or more but 90% by mass or less.

An amount of water in the liquid is preferably small. The amount of water in the liquid is preferably less than 45% by mass, more preferably less than 5% by mass.

-Resin-

The resin is not particularly limited and may be appropriately selected depending on the intended purpose, so long as it can contribute to at least one selected from the group consisting of binding the powder and the powder, binding the fibers and the fibers, and binding the powder and the fibers. Examples thereof include acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, α-olefin/maleic anhydride-based copolymer, esterified substances of a-olefin/maleic anhydride-based copolymer, polystyrene, poly(meth)acrylic acid ester, α-olefin/maleic anhydride/vinyl group-containing monomer copolymer, styrene/maleic anhydride copolymer, styrene/(meth) acrylic acid ester copolymer, polyamide, epoxy resins, xylene resins, ketone resins, petroleum resins, rosin or its derivatives, coumarone indene resins, terpene resins, polyurethane resins, synthetic rubbers such as styrene/butadiene rubber, polyvinyl butyral, nitrile rubber, acryl rubber, and ethylene/propylene rubber, and nitrocellulose.

The resin may be a polymer compound of an organic metal or an organic matter having a low hydrophilicity.

When the liquid includes the resin, an amount of the resin in the liquid is not particularly limited and may be appropriately selected depending on the intended purpose. The amount is preferably 5% by mass or more but 40% by mass or less, more preferably 10% by mass or more but 30% by mass or less, in order to control viscosity of the liquid to a predetermined range.

-Other components-

Examples of the other components include inorganic particles.

--Inorganic particles--

The liquid may include inorganic particles that have such a particle diameter that does not cause clogging in a nozzle. By inclusion of inorganic particles in the liquid, the inorganic particles are disposed in a gap between the powders in the powder-fiber mixture layer when the liquid is applied to the powder-fiber mixture layer. As a result, density of the obtained three-dimensional object is improved.

Examples of a material of the inorganic particles include glass, metal oxide, metal carbide, and metal nitride.

Examples of the metal oxide include zirconia, alumina, and mullite (aluminosilicate mineral).

Examples of the metal carbide include silicon carbide and tungsten carbide.

Examples of the metal nitride include silicon nitride and aluminum nitride.

These may be used alone or in combination.

A material of the inorganic particles is preferably the same material as the material of the raw material of the ceramics.

A volume average particle diameter of the inorganic particles is not particularly limited and may be appropriately selected depending on the intended purpose, so long as it is smaller than a particle diameter of the raw material of the ceramics. The volume average particle diameter is preferably 1 nm or more but 5 $\mu$m or less.

The volume average particle diameter can be measured by, for example, the laser diffraction-scattering method.

An amount of the inorganic particles in the liquid is not particularly limited and may be appropriately selected depending on the intended purpose. The amount is preferably 5% by mass or more but 60% by mass or less, more preferably 15% by mass or more but 50% by mass or less.

«Step A2-3 and unit A2-3»

The step A2-3 is not particularly limited and may be appropriately selected depending on the intended purpose, so long as it is a step (binding step) of drying a precursor of a three-dimensional object containing the liquid that is obtained by performing the step A2-1 and the step A2-2, to bind at least one of between the powder and the powder, between the fibers and the fibers, and between the powder and the fibers.

The unit A2-3 is not particularly limited and may be appropriately selected depending on the intended purpose, so long as it is a unit (binding unit) configured to dry a precursor of a three-dimensional object containing the liquid that is obtained using the unit A2-1 and the unit A2-2, to bind at least one of between the powder and the powder, between the fibers and the fibers, and between the powder and the fibers.

In the step A2-3, the precursor of the three-dimensional object containing the liquid is dried. At this time, when a solvent in the liquid is volatilized to solidify the resin dissolved in the solvent, at least one of between the powder and the powder, between the fibers and the fibers, and between the powder and the fibers is bound via the resin.

The step A2-3 may be performed on a precursor of a three-dimensional object obtained by undergoing one cycle of the step A2-1 and the step A2-2. In this case, the precursor of the three-dimensional object may be, for example, one layer of the powder-fiber mixture layer. In this case, the step A2-3 may be performed per one cycle of the step A2-1 and the step A2-2.

The step A2-3 may be performed on the precursor of the three-dimensional object obtained by repeating the step A2-1 and the step A2-2. In this case, the precursor of the three-dimensional object may be a lamination structure in which a plurality of powder-fiber mixture layers are laminated.

Note that, in the lamination structure of the plurality of powder-fiber mixture layers, a boundary between the powder-fiber mixture layers may be clear or unclear.

A drying temperature is not particularly limited and may be appropriately selected depending on the intended purpose. The drying temperature is preferably 50°C or more but 200°C or less.

A drying time is not particularly limited and may be appropriately selected depending on the intended purpose. The drying time is preferably 1 hour or more but 48 hours or less.

When a boiling point of the volatile component contained in the liquid is low or when volatility of the volatile component contained in the liquid is high, the step A2-3 may be air drying. That is, the step A2-3 may be a step of leaving the precursor of the three-dimensional object containing the liquid to stand, to dry the precursor of the three-dimensional object containing the liquid.

«Step A2-4 and unit A2-4»

The step A2-4 is not particularly limited and may be appropriately selected depending on the intended purpose, so long as it is a step (heating step) of heating the precursor of the three-dimensional object dried. For example, the step A2-4 may be performed using, for example, a known heating device.

The unit A2-4 is not particularly limited and may be appropriately selected depending on the intended purpose, so long as it is a unit (heating unit) configured to heat the precursor of the three-dimensional object dried. Examples thereof include known heating devices.

In one aspect, heating in the step A2-4 and the unit A2-4 is heating for sintering the precursor of the three-dimensional object.

In another aspect, the heating in the step A2-4 and the unit A2-4 functions as decomposition and removal of the resin and sintering of the precursor of the three-dimensional object.

In the heating, the decomposition and removal of the resin and the sintering of the precursor of the three-dimensional object may be performed at one time or may be separately performed. It is preferable to perform the decomposition and removal of the resin and the sintering of the precursor of the three-dimensional object at one time because steps can be shortened.

When the decomposition and removal of the resin and the sintering of the precursor of the three-dimensional object are performed at one time, the following procedure may be employed. Specifically, for example, a precursor of a three-dimensional object is heated to a temperature at which the resin can be decomposed and removed, followed by retaining the temperature for a certain time. After the resin is decomposed to remove the resin from the precursor of the three-dimensional object, the precursor of the three-dimensional object is heated to a sintering temperature of the raw material of the ceramics used, to sinter the precursor of the three-dimensional object.

When the decomposition and removal of the resin and the sintering of the precursor of the three-dimensional object are separately performed, the following procedure may be employed. Specifically, for example, a precursor of a three-dimensional object is heated to a temperature at which the resin can be decomposed and removed, followed by retaining the temperature for a certain time. After the resin is decomposed to remove the resin from the precursor of the three-dimensional object, the resultant is temporarily cooled (e.g., standing to cool). Then, the precursor of the three-dimensional object is heated to a sintering temperature of the raw material of the ceramics used, to sinter the precursor of the three-dimensional object. That is, the sintering treatment is performed after the resin decomposition treatment.

An atmosphere in the heating for decomposing and removing the resin is not particularly limited and may be appropriately selected depending on the intended purpose. Examples of the atmosphere include inert atmospheres (e.g., nitrogen atmosphere and argon atmosphere).

A heating temperature and heating time for decomposing and removing the resin are not particularly limited and may be appropriately selected depending on the intended purpose, so long as the heating temperature is a temperature at which the resin can be decomposed and removed, and the heating time is time for which the resin can be decomposed and removed. The heating temperature is, for example, 150°C or more but 700°C or less, and the heating time is, for example, 0.5 hours or more but 24 hours or less.

The atmosphere in the sintering is not particularly limited and may be appropriately selected depending on the intended purpose. Examples of the atmosphere include inert atmospheres (e.g., nitrogen atmosphere and argon atmosphere).

A heating temperature and heating time of the sintering are not particularly limited and may be appropriately selected depending on the intended purpose, so long as the heating temperature is a temperature at which sintering can be performed and the heating time is time for which sintering can be performed. The heating temperature is, for example, 800°C or more but 2000°C or less, and the heating time is, for example, 0.5 hours or more but 12 hours or less.

«Other steps and other units»

A step of removing unnecessary powder and unnecessary fibers as a step A2-5 may be performed between the step A2-3 and the step A2-4.

The embodiment A2 of the apparatus for producing a three-dimensional object may include, as a unit A2-5, a unit configured to remove unnecessary powder-fiber mixture (unnecessary powder and unnecessary fibers).

Examples of the step A2-5 include a step of removing the unnecessary powder and the unnecessary fibers attached around the precursor of the three-dimensional object using, for example, an air spray or a brush.

Examples of the unit A2-5 include an air spray and a brush.

Examples of a method for producing a three-dimensional object and an apparatus for producing a three-dimensional object will be described with reference to the drawings.

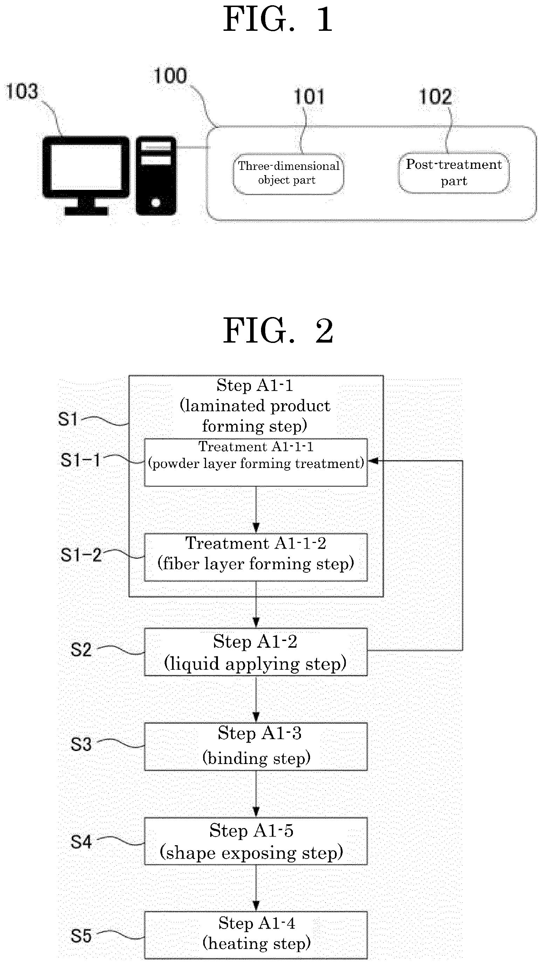

FIG. 1 is a schematic view relating to production of a three-dimensional object.

FIG. 1 illustrates an apparatus for producing a three-dimensional object 100 and a computer 103. The apparatus for producing a three-dimensional object 100 includes a three-dimensional object part 101 and a post-treatment part 102.

In production of a three-dimensional object, 3D data of a three-dimensional object are sent from the computer 103 to the three-dimensional object part 101, and molding is performed based on the 3D data in the three-dimensional object part 101. Then, a post-treatment such as heating is performed in the post-treatment part 102 to complete a three-dimensional object.

Examples of an embodiment A1 of the method for producing a three-dimensional object and the apparatus for producing a three-dimensional object will be described hereinafter.

FIG. 2 is a flowchart of one example of an embodiment A1 of a method for producing a three-dimensional object.

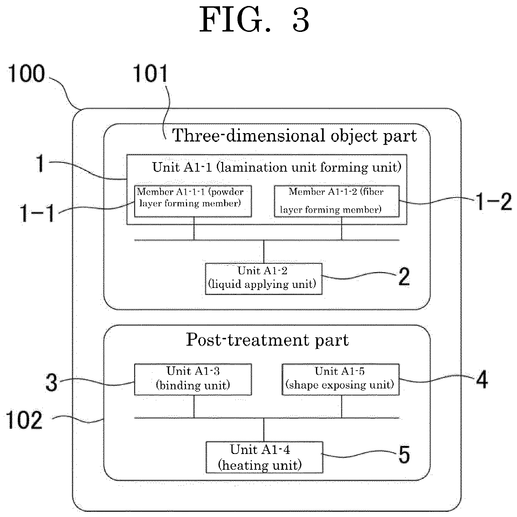

FIG. 3 is a functional block diagram of one example of an embodiment A1 of an apparatus for producing a three-dimensional object.

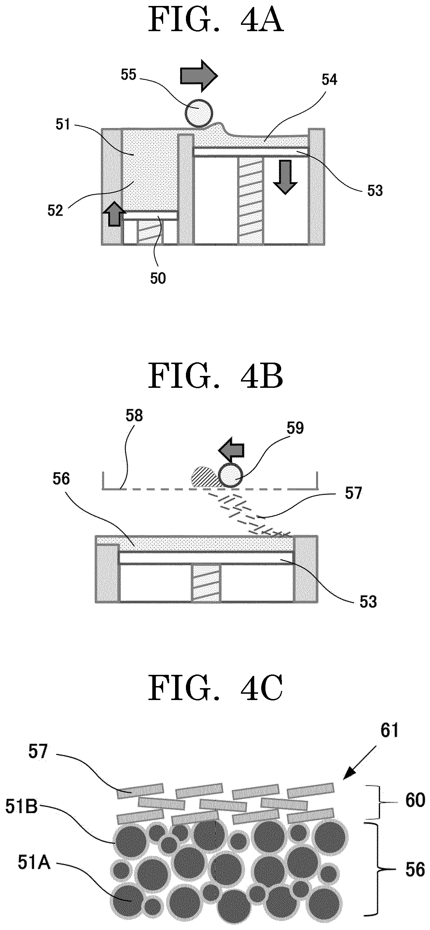

FIG. 4A to FIG. 4I are each a schematic view for presenting one example of an embodiment A1 of a method for producing a three-dimensional object.

An apparatus for producing a three-dimensional object 100 in FIG. 3 includes a three-dimensional object part 101 and a post-treatment part 102. The three-dimensional object part 101 includes a lamination unit forming unit as a unit A1-1 denoted by reference numeral 1 and a liquid applying unit as a unit A1-2 denoted by reference numeral 2. The post-treatment part 102 includes a binding unit as a unit A1-3 denoted by reference numeral 3, a shape exposing unit as a unit A1-5 denoted by reference numeral 4, and a heating unit as a unit A1-4 denoted by reference numeral 5. The unit A1-1 (lamination unit forming unit) 1 includes a powder layer forming member as a member 1-1 denoted by reference numeral 1-1 and a fiber layer forming member as a member 1-2 denoted by reference numeral 1-2.

<Step S1>

First, a step A1-1 (lamination unit forming step) is performed. In the step A1-1, a lamination unit of a powder layer and a fiber layer is formed (S1). The powder layer is formed by a treatment A1-1-1 (a powder layer forming treatment) (S1-1). The fiber layer is formed by a treatment A1-1-2 (fiber layer forming step) (S1-2).

First, the treatment A1-1-1 (a powder layer forming treatment) is performed. In the treatment A1-1-1, a powder layer is formed by powder that contains a raw material of a ceramics (S1-1). The treatment A1-1-1 is performed using, for example, the member A1-1-1 (a powder layer forming member). The member A1-1-1 (a powder layer forming member) includes: powder 51; a powder storing tank 52 at supply side that stores the powder 51; a powder storing tank 54 at production side configured to form a powder layer; and a leveling mechanism 55, as presented in FIG. 4A. The powder storing tank 52 at supply side includes a stage 50 that can go up and down. The powder storing tank 54 at production side includes a stage 53 that can go up and down. When the leveling mechanism 55 moves from the powder storing tank 52 at supply side to the powder storing tank 54 at production side, the powder 51 in the powder storing tank 52 at supply side moves to the powder storing tank 54 at production side to form a powder layer 56 on a stage 53 (FIG. 4B).

Next, the treatment A1-1-2 (fiber layer forming treatment) is performed. In the treatment A1-1-2, a fiber layer formed of fibers containing an inorganic material is formed (S1-2). The member A1-1-2 (fiber layer forming member) is, for example, a sieve 58 as presented in FIG. 4B. The sieve 58 is disposed directly above the powder layer 56 with a distance of about 10 mm. The sieve 58 houses fibers 57. A roller 59 is allowed to run on the sieve 58, the fibers 57 fall on the powder layer 56 from meshes of the sieve 58 (FIG. 4B). Then, the fibers 57 are applied on the powder layer 56 to form a fiber layer 60. Here, a cross-sectional view in which the powder layer 56 and the fiber layer 60 applied on the powder layer 56 are enlarged is presented (FIG. 4C). The powder 51 constituting the powder layer 56 includes a raw material of a ceramics 51A and a resin 51B. The resin 51B covers the raw material of the ceramics 51A. The fibers 57 constituting the fiber layer 60 are formed of an inorganic material having a thin and long shape.

By performing the treatment A1-1-1 (a powder layer forming treatment) and the treatment A1-1-2 (fiber layer forming treatment) in this order, a lamination unit 61 in which the fiber layer 60 is formed on the powder layer 56 can be obtained.

<Step S2>

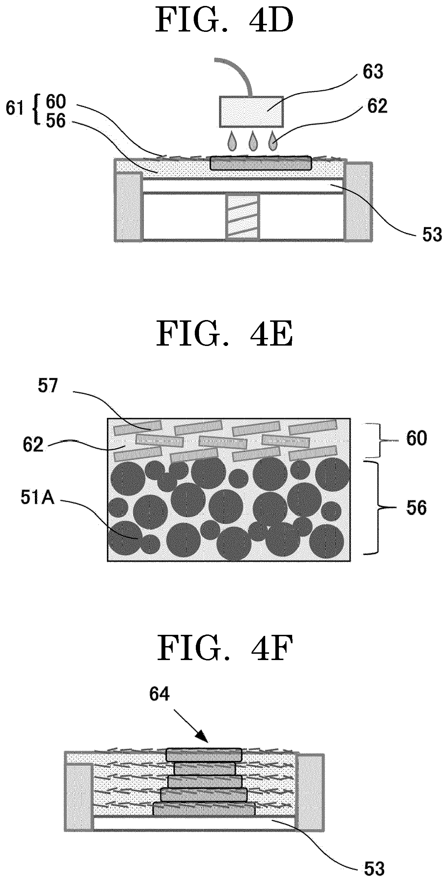

Subsequently, a step A1-2 (liquid applying step) is performed. In the step A1-2, liquid for binding a powder layer and a fiber layer is applied to any region of the lamination unit (S2). The second step is performed using, for example, the unit A1-2 (liquid applying unit) 2. The unit A1-2 (liquid applying unit) 2 is, for example, an inkjet nozzle 63 as presented in FIG. 4D. Using the inkjet nozzle 63, liquid 62 is applied to any region of the lamination unit 61. Here, a cross-sectional view of the enlarged lamination unit 61 on which the liquid 62 is applied is presented (FIG. 4E). The resin 51B contained in the powder 51 is dissolved in the liquid 62.

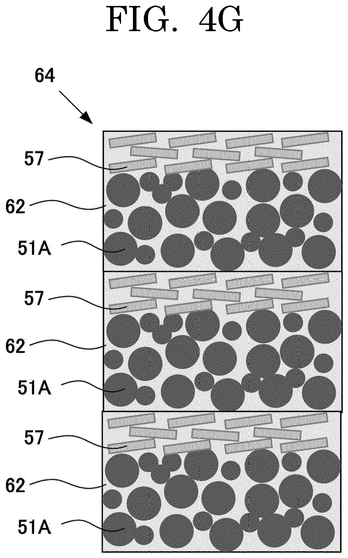

Then, the step A1-1 and the step A1-2 are repeated until a desired number of laminated layers is satisfied. As a result, as presented in FIG. 4F and FIG. 4G, it is possible to obtain, on a stage 53, a lamination structure (a precursor 64 of a three-dimensional object containing the liquid) of a plurality of lamination units 61 on which the liquid 62 is applied.

<Step S3>

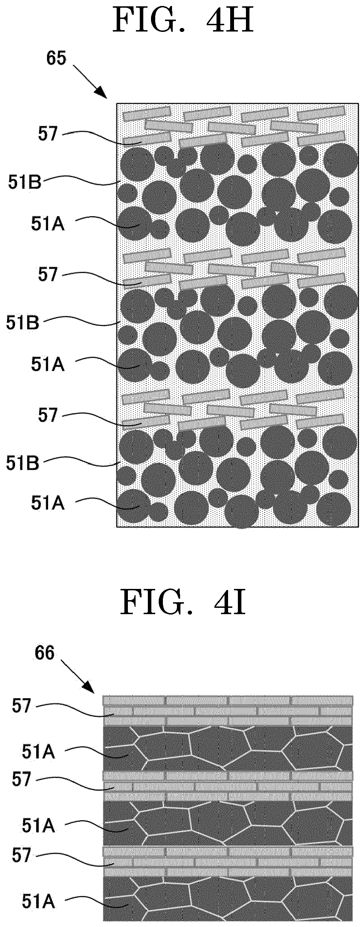

Then, a step A1-3 (binding step) is performed. In the step A1-3, a precursor of a three-dimensional object containing the liquid that is obtained by performing the step A1-1 and the step A1-2 is dried, to bind the powder layer and the fiber layer (S3). In this embodiment, the powder layer and the fiber layer are bound via a resin. The step A1-3 is performed using, for example, a unit A1-3 (binding unit) 3. The unit A1-3 (binding unit) 3 is, for example, a dryer. The precursor 64 of the three-dimensional object containing the liquid 62 is dried. At this time, when a solvent in the liquid 62 is volatilized, the resin 51B dissolved in the solvent is solidified to bind the powder layer 56 and the fiber layer 60 via the resin 51B (FIG. 4H). As a result, a precursor 65 of the three-dimensional object dried is obtained.

<Step S4>

Subsequently, a step A1-5 (shape exposing step) is performed. In the step A1-5, the unnecessary powder layer 56 and the unnecessary fiber layer 60 attached around the precursor of the three-dimensional object are removed using, for example, an air spray or a brush (S4). As a result, a shape of the three-dimensional object in the precursor of the three-dimensional object is exposed.

<Step S5>

Subsequently, a step A1-4 (heating step) is performed. In the step A1-4, the precursor of the three-dimensional object dried is heated (S5). The step A1-4 is performed using, for example, a unit A1-4 (heating unit) 5. The unit A1-4 (heating unit) 5 is, for example, a heating device. In the step A1-4 of the step S5, decomposition and removal of the resin and sintering of the precursor of the three-dimensional object are performed at one time.

As a result, as presented in FIG. 4I, the raw material 51A of the ceramics is sintered, to obtain a three-dimensional object 66 in which the fibers 57 are disposed in the sintered body formed of the raw material 51A of the ceramics.

Next, other examples of an embodiment A1 of a method for producing a three-dimensional object and an apparatus for producing a three-dimensional object will be described.

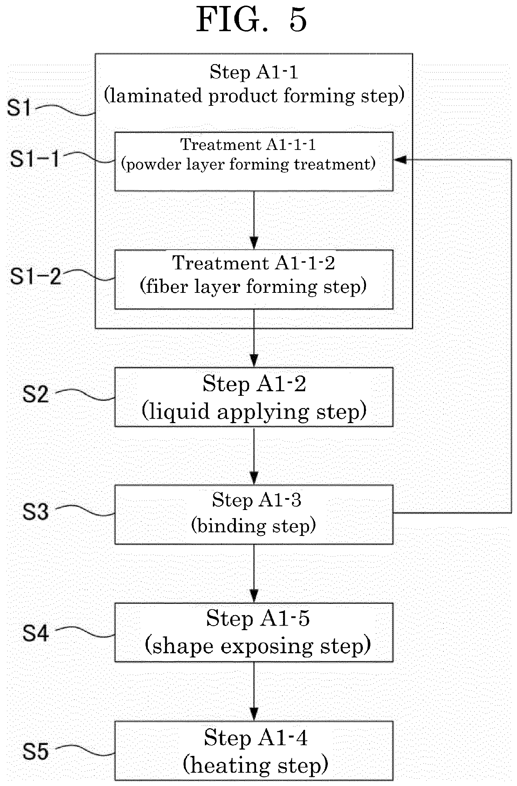

FIG. 5 is a flowchart of another example of an embodiment A1 of a method for producing a three-dimensional object.

In the flowchart of FIG. 5, the step A1-1, the step A1-2, and the step A1-3 are repeated to obtain a precursor of a three-dimensional object containing the liquid. The other steps are the same as those described in the flowchart of FIG. 2.

Next, other examples of an embodiment A1 of a method for producing a three-dimensional object and an apparatus for producing a three-dimensional object will be described.

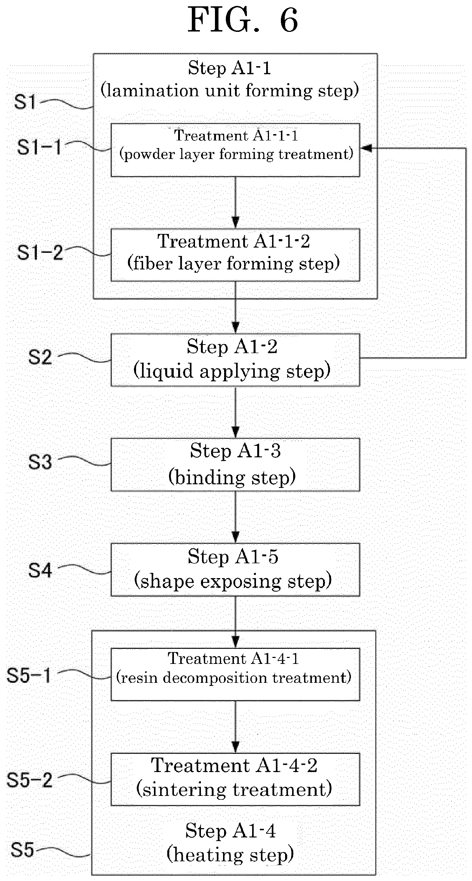

FIG. 6 is a flowchart of another example of an embodiment A1 of a method for producing a three-dimensional object.

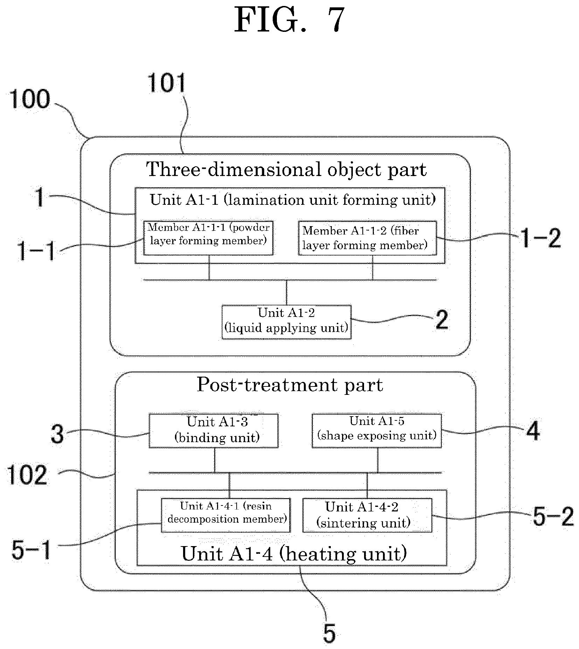

FIG. 7 is a functional block diagram of another example of an embodiment A1 of an apparatus for producing a three-dimensional object.

In the flowchart of FIG. 6, as one aspect of the step A1-4 of the embodiment A1 of the method for producing a three-dimensional object, a step S5-1 (treatment A1-4-1: resin decomposition treatment) and a step S5-2 (treatment A1-4-2: sintering treatment) are performed in the step S5 (step A1-4: heating step) of the flowchart of FIG. 2.

An apparatus for producing a three-dimensional object 100 in FIG. 7 includes a three-dimensional object part 101 and a post-treatment part 102. The three-dimensional object part 101 includes: a lamination unit forming unit as a unit A1-1 denoted by reference numeral 1 and a liquid applying unit as a unit A1-2 denoted by reference numeral 2. The post-treatment part 102 includes: a binding unit as a unit A1-3 denoted by reference numeral 3; a shape exposing unit as a unit A1-5 denoted by reference numeral 4; and a heating unit as a unit A1-4 denoted by reference numeral 5. The unit A1-1 (lamination unit forming unit) 1 includes: a powder layer forming member as a member A1-1-1 denoted by reference numeral 1-1; and a fiber layer forming member as a member A1-1-2 denoted by reference numeral 1-2. The unit A1-4 (heating unit) 5 includes: a resin decomposition member as a member A1-4-1 denoted by reference numeral 5-1; and a sintering member as a member A1-4-2 denoted by reference numeral 5-2.

<Step S5-1>

In the treatment A1-4-1 (resin decomposition treatment), the precursor of the three-dimensional object dried is heated to a temperature at which the resin can be decomposed and removed, and the resin included in the precursor of the three-dimensional object dried is decomposed, to remove the resin from the precursor of the three-dimensional object dried (S5-1). The treatment A1-4-1 is performed using, for example, a member A1-4-1 (resin decomposition member) 5-1. The unit A1-4-1 (resin decomposition member) is, for example, a heating device.

<Step S5-2>

Subsequently, in the treatment A1-4-2 (sintering treatment), the precursor of the three-dimensional object is heated to a sintering temperature of the raw material of the ceramics used, to sinter the precursor of the three-dimensional object (S5-2). The step AI-4-2 is performed using, for example, a unit A1-4-2 (sintering unit) 5-2. The member 4-2 (sintering member) is, for example, a heating device that can heat the precursor of the three-dimensional object to a sintering temperature of the raw material of the ceramics.

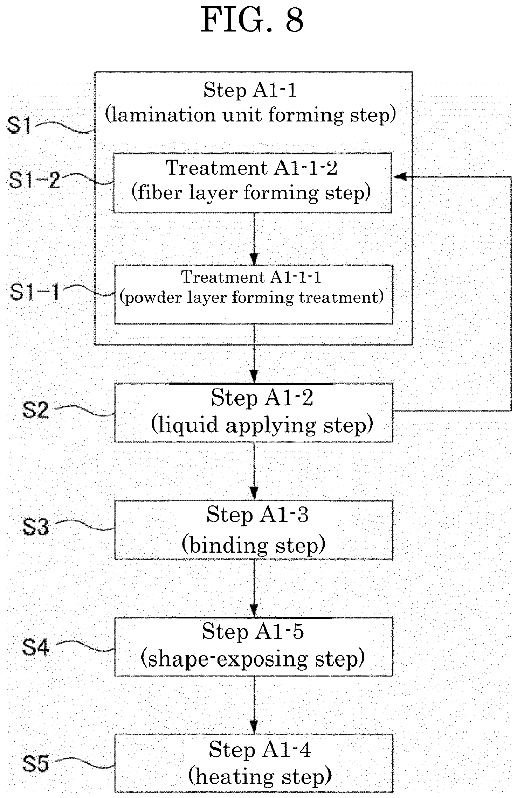

FIG. 8 is a flowchart of another example of an embodiment A1 of a method for producing a three-dimensional object.

In the flowchart of FIG. 8, as one aspect of the step A1-1 in the embodiment A1 of the method for producing a three-dimensional object, the order of the treatment A1-1-1 and the treatment A1-1-2 in the step S1 (first step: lamination unit forming step) of the flowchart of FIG. 2 is reversed. That is, in the step A1-1 of the flowchart of FIG. 8, after the treatment A1-1-2 (fiber layer forming treatment) is performed, the treatment A1-1-1 (a powder layer forming treatment) is performed, to form a lamination unit.

Next, examples of an embodiment A2 of a method for producing a three-dimensional object and an apparatus for producing a three-dimensional object will be described.

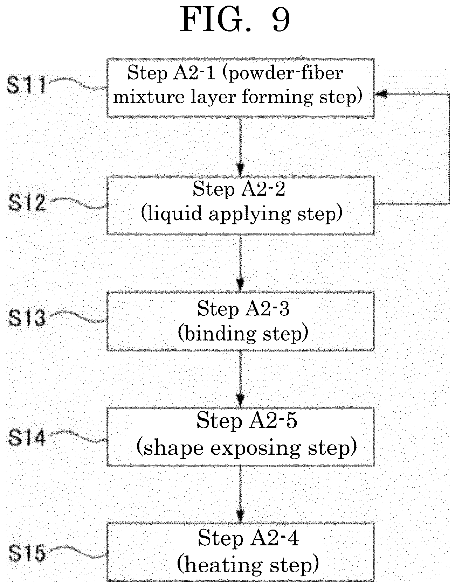

FIG. 9 is a flowchart of one example of an embodiment A2 of a method for producing a three-dimensional object.

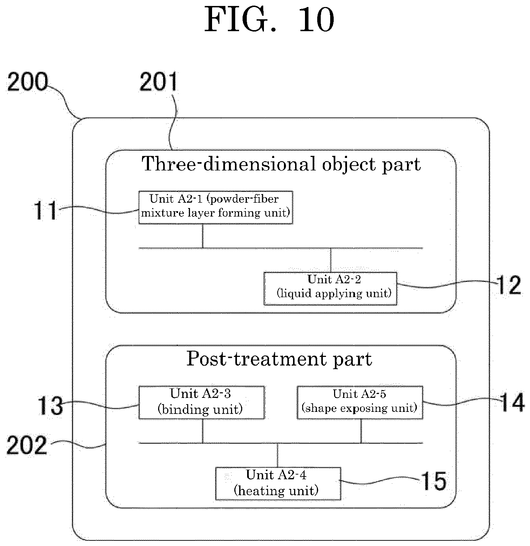

FIG. 10 is a functional block diagram of one example of an embodiment A2 of an apparatus for producing a three-dimensional object.

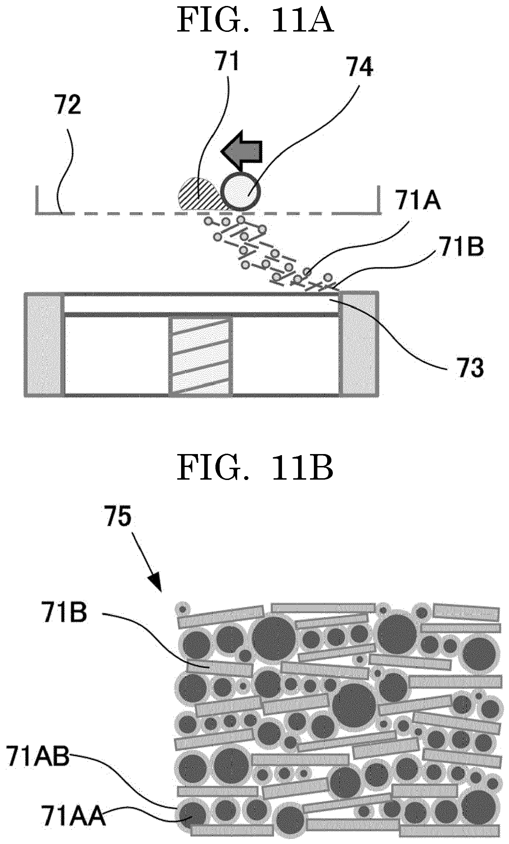

FIG. 11A to FIG. 11H are each a schematic view for presenting one example of an embodiment A2 of a method for producing a three-dimensional object.

An apparatus for producing a three-dimensional object 200 in FIG. 10 includes a three-dimensional object part 201 and a post-treatment part 202. The three-dimensional object part 201 includes: a powder-fiber mixture layer forming unit as a unit A2-1 denoted by reference numeral 11; and a liquid applying unit as a unit A2-2 denoted by reference numeral 12. The post-treatment part 202 includes: a binding unit as a unit A2-3 denoted by reference numeral 13; a shape exposing unit as a unit A2-5 denoted by reference numeral 14; and a heating unit as a unit A2-4 denoted by reference numeral 15.

<Step S11>

First, a step A2-1 (powder-fiber mixture layer forming step) is performed. In the step A2-1, a powder-fiber mixture of the powder and the fibers is applied on a target surface, to form a powder-fiber mixture layer (S11). The step A2-1 is performed using, for example, a unit A2-1 (powder-fiber mixture layer forming unit) 11. The unit A2-1 (powder-fiber mixture layer forming unit) 11 is, for example, a sieve 72 as presented in FIG. 11A. The sieve 72 is disposed directly above a stage 73 that can go up and down with a distance of about 10 mm. The sieve 72A houses a powder-fiber mixture 71. By allowing a roller 74 to run on the sieve 72, the powder-fiber mixture 71 that contains powder 71A and fibers 71B falls on the stage 73 from meshes of the sieve 72. As a result, a powder-fiber mixture layer formed of the powder-fiber mixture 71 is formed. Here, a cross-sectional view of an enlarged powder-fiber mixture layer 75 is presented (FIG. 11B). The powder 71A constituting the powder-fiber mixture layer 75 includes a raw material of a ceramics 71AA and a resin 71AB. The resin 71AB covers the raw material of the ceramics 71AA. The fibers 71B are formed of an inorganic material having a thin and long shape.

<Step S12>

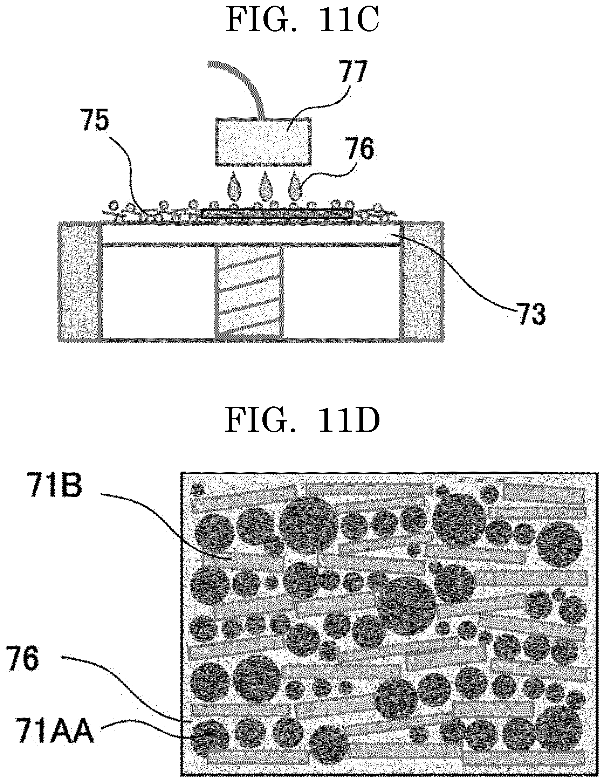

Subsequently, a step A2-2 (liquid applying step) is performed. In the step A2-2, liquid for binding at least one of between the powder and the powder, between the fibers and the fibers, and between the powder and the fibers via a resin is applied to any region of the powder-fiber mixture layer (S12). The step A2-2 is performed using, for example, a unit A2-2 (liquid applying unit) 12. The unit A2-2 (liquid applying unit) 12 is, for example, an inkjet nozzle 77 as presented in FIG. 11C. Using the inkjet nozzle 77, liquid 76 is applied to any region of the powder-fiber mixture layer 75. A cross-sectional view of the enlarged powder-fiber mixture layer 75 on which the liquid 76 is applied is presented (FIG. 11D). The resin 71AB contained in the powder 71A is dissolved in the liquid 76.

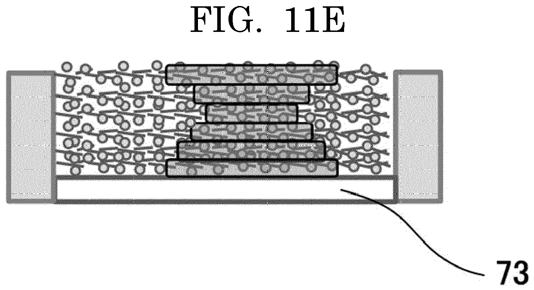

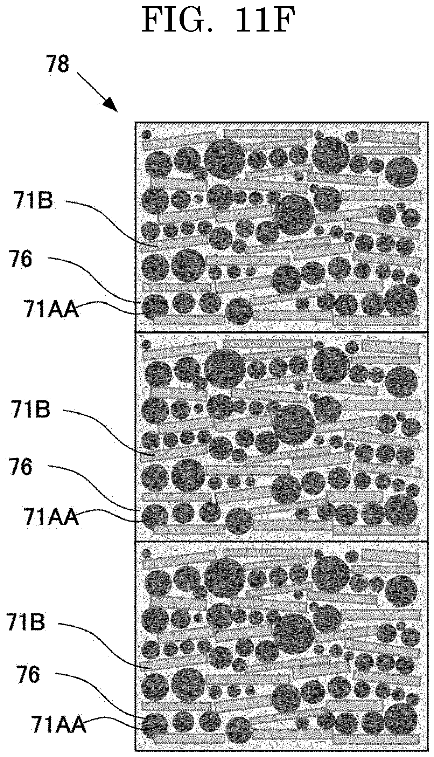

Subsequently, the step A2-1 and the step A2-2 are repeated until a desired number of laminated layers is satisfied. In this way, as presented in FIG. 11E and FIG. 11F, it is possible to obtain, on the stage 73, a lamination structure of the powder-fiber mixture layer 75 to which the liquid 76 is applied (precursor 78 of a three-dimensional object containing the liquid).

<Step S13>

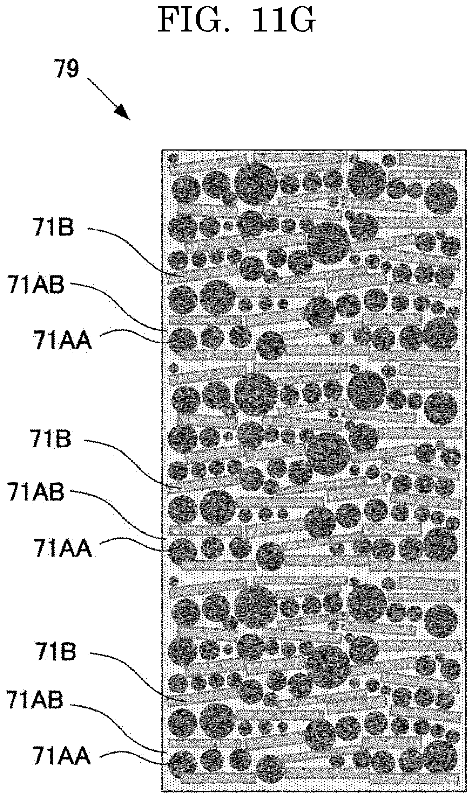

Subsequently, a step A2-3 (binding step) is performed. In the step A2-3, the precursor of the three-dimensional object containing the liquid that is obtained by performing the step A2-1 and the step A2-2 is dried, to bind at least one of between the powder and the powder, between the fibers and the fibers, and between the powder and the fibers via a resin (S13). The step A2-3 is performed using, for example, a unit A2-3 (binding unit) 13. The unit A2-3 (binding unit) 13 is, for example, a dryer. The precursor 78 of the three-dimensional object containing the liquid 76 is dried. At this time, when a solvent in the liquid 76 is volatilized, the resin 71AB dissolved in the solvent is solidified, to bind at least one of between the powder 71A and the powder 71A (the raw material of the ceramics 71AA), between the fibers 71B and the fibers 71B, and the powder 71A (the raw material of the ceramics 71AA) and the fibers 71B via the resin 71AB (FIG. 11G). As a result, the precursor 79 of the three-dimensional object dried can be obtained.

<Step S14>

Subsequently, a step A2-5 (shape exposing step) is performed. In the step A2-5, the unnecessary powder 71A and the unnecessary fibers 71B attached around the precursor of the three-dimensional object are removed using, for example, an air spray or a brush (S14). As a result, a shape of the three-dimensional object in the precursor of the three-dimensional object is exposed.

<Step S15>

Subsequently, a step A2-4 (heating step) is performed. In the step A2-4, the precursor of the three-dimensional object dried is heated (S15). The step A2-4 is performed using, for example, a unit A2-4 (heating unit) 15. The unit A2-4 (heating unit) 15 is, for example, a heating device. In the step A2-4 of step S15, a treatment A2-4-1 (decomposition and removal of the resin) and a treatment A2-4-2 (sintering of the precursor of the three-dimensional object) are performed at one time.

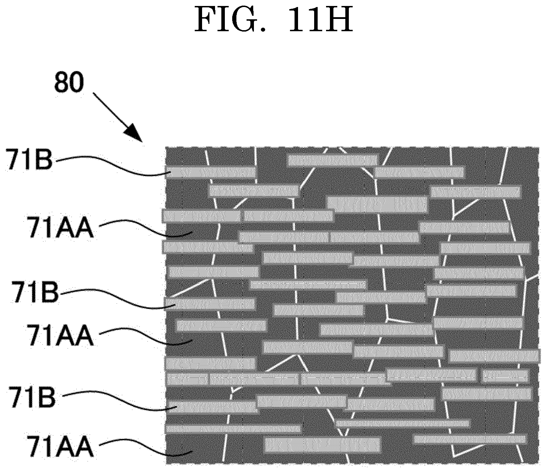

As a result, as presented in FIG. 11H, the raw material of the ceramics 71AA is sintered, to obtain a three-dimensional object 80 in which the fibers 71B are disposed in the sintered body formed of the raw material of the ceramics 71AA.

Next, other examples of an embodiment A2 of a method for producing a three-dimensional object and an apparatus for producing a three-dimensional object will be described.

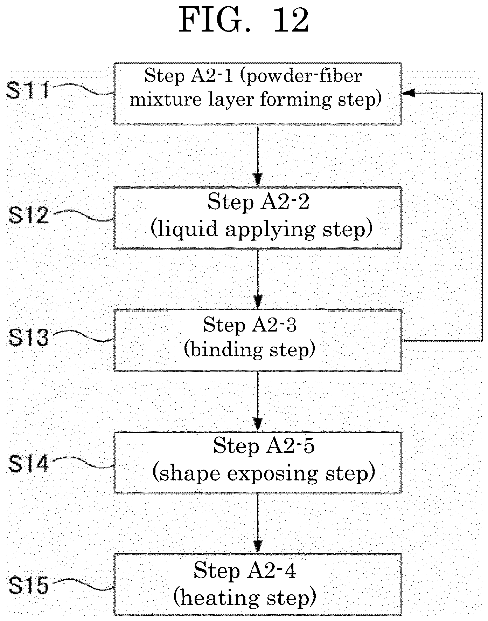

FIG. 12 is a flowchart of another example of an embodiment A2 of a method for producing a three-dimensional object.

In the flowchart of FIG. 12, the step A2-1 and the step A2-2 are repeated to obtain a precursor of a three-dimensional object containing the liquid. The other steps are the same as those described in the flowchart of FIG. 9.

Next, other examples of an embodiment A2 of a method for producing a three-dimensional object and an apparatus for producing a three-dimensional object will be described.

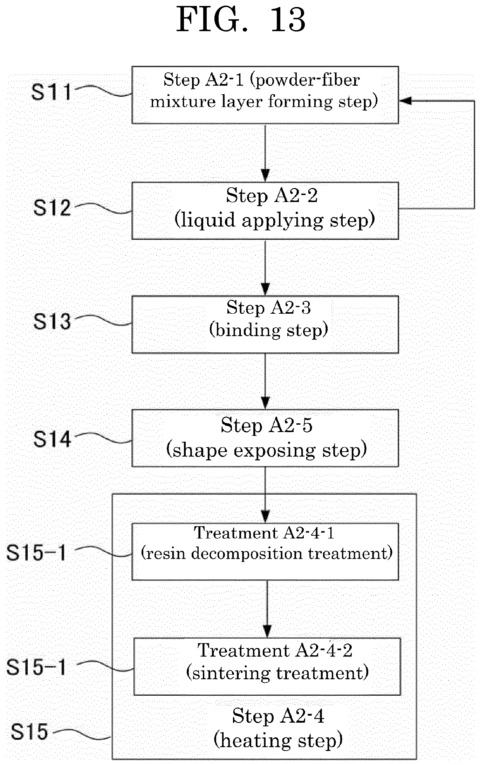

FIG. 13 is a flowchart of another example of an embodiment A2 of a method for producing a three-dimensional object.

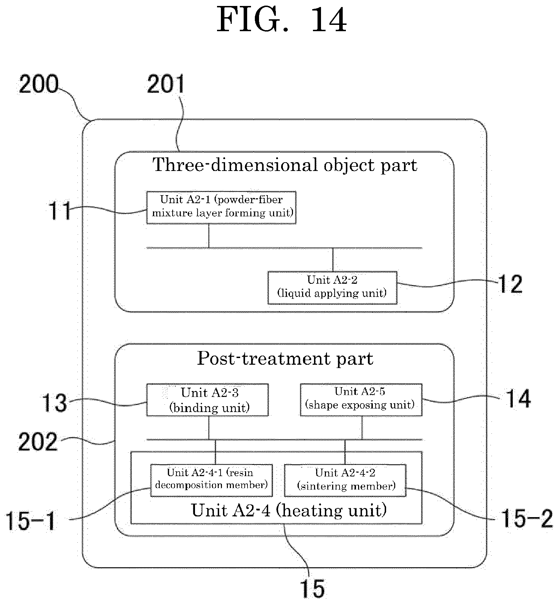

FIG. 14 is a functional block diagram of another example of an embodiment A2 of an apparatus for producing a three-dimensional object.

In the flowchart of FIG. 13, as one aspect of the step A2-4 of the embodiment A2 of the method for producing a three-dimensional object, a step S15-1 (treatment A2-4-1: resin decomposition treatment) and a step S15-2 (treatment A2-4-2: sintering treatment) are performed instead of the step S15 (step A2-4: heating step) in the flowchart of FIG. 9.

An apparatus for producing a three-dimensional object 200 in FIG. 14 includes a three-dimensional object part 201 and a post-treatment part 202. The three-dimensional object part 201 includes: a powder-fiber mixture layer forming unit as a unit A2-1 denoted by reference numeral 11; and a liquid applying unit as a unit A2-2 denoted by reference numeral 12. The post-treatment part 202 includes: a binding unit as a unit A2-3 denoted by reference numeral 13; a shape exposing unit as a unit A2-5 denoted by reference numeral 14; and a heating unit as a unit A2-4 denoted by reference numeral 15. The unit A2-4 denoted by reference numeral 15 includes: a resin decomposition member as a member A2-4-1 denoted by reference numeral 15-1; and a sintering member as a member A2-4-2 denoted by reference numeral 15-2.

<Step S15-1>

In a step A2-4-1 (resin decomposition treatment), the precursor of the three-dimensional object dried is heated to a temperature at which the resin can be decomposed and removed, and the resin included in the precursor of the three-dimensional object dried is decomposed, to remove the resin from the precursor of the three-dimensional object dried (S15-1). The treatment A2-4-1 is performed using, for example, a member A2-4-1 (resin decomposition member) 15-1. The member A2-4-1 (resin decomposition member) is, for example, a heating device.

<Step S15-2>

Subsequently, a treatment A2-4-2 (sintering treatment), the precursor of the three-dimensional object is heated to a sintering temperature of the raw material of the ceramics used, to sinter the precursor of the three-dimensional object (S15-2). The treatment A2-4-2 is performed using, for example, a member A2-4-2 (sintering member) 15-1. The member A2-4-2 (sintering member) is, for example a heating device that can heat the precursor of the three-dimensional object to a sintering temperature of the raw material of the ceramics.

Next, embodiments B in the three-dimensional object of the present disclosure will be described.

An embodiment B1 of a method of the present disclosure for producing a three-dimensional object includes a step B1, a step B2, a step B3, and further includes other steps such as a step B4 and a step B5 if necessary.

The step B1 is a step of forming a powder layer.

The step B2 is a step of disposing a fiber-containing sheet.

The step B3 is a step of applying, to a predetermined region, liquid for binding the powder layer and the fiber-containing sheet.

The step B4 is a step of drying a precursor of a three-dimensional object containing the liquid that is obtained by performing the step B1, the step B2, and the step B3, to bind the powder layer and the fiber-containing sheet.

The step B5 is a step of heating the precursor of the three-dimensional object dried.

An embodiment B1 of an apparatus of the present disclosure for producing a three-dimensional object includes a unit B1, a unit B2, and a unit B3, and further includes other units such as a unit B4 and a unit B5 if necessary.

The unit B1 is a unit configured to form a powder layer.

The unit B2 is a unit configured to dispose a fiber-containing sheet.

The unit B3 is a unit configured to apply, to a predetermined region, liquid for binding the powder layer and the fiber-containing sheet.

The unit B4 is a unit configured to dry a precursor of a three-dimensional object containing the liquid that is obtained by using the unit B1, the unit B2, and the unit B3, to bind the powder layer and the fiber-containing sheet.

The unit B5 is a unit configured to heat the precursor of the three-dimensional object dried.

In the conventional technique, in the methods for producing a three-dimensional object, a method for laminating a sheet material of each layer has been proposed (for example, see Japanese Patent No. 5088695).

However, in this proposed technique, sheet materials of the respective layers are united by a solution of the sheet material, and reuse of surplus materials is not easy.

In an embodiment B of the present disclosure, a powder layer and a fiber-containing sheet are alternatively laminated to produce a precursor of a three-dimensional object. At this time, a powder layer and a fiber-containing sheet that are not used in the precursor of the three-dimensional object are generated. Because the fiber is contained in the sheet, the fiber and the powder in the powder layer can be each collected and reused in a state that they are not mixed. Particularly, because the fiber is expensive, it can be effective to collect and reuse the fiber.

In the embodiment B of the present disclosure, because fibers are introduced into a ceramics as powder used in the method for producing a three-dimensional object, the fracture toughness value of the three-dimensional object can be improved while high cost and long production term can be prevented.

In the method of the present disclosure for producing a three-dimensional object, the three-dimensional object is obtained after raw materials of the three-dimensional object are temporarily bound. In this case, even when, for example, a resin is used for the binding, an amount of the resin to be used for the binding may be small. Therefore, volumetric shrinkage after the sintering is small. As a result, when a large structural member is produced, crack at the time of sintering can be prevented. Therefore, a model having such a dimension that is practical as a structural member can be produced.

<Step B1 and unit B1>

The step B1 (a powder layer forming step) is not particularly limited and may be appropriately selected depending on the intended purpose, so long as it is a step of forming a powder layer.

The unit B1 (a powder layer forming unit) is not particularly limited and may be appropriately selected depending on the intended purpose, so long as it is a unit configured to form a powder layer.

The powder layer is formed by using powder.

When the powder layer is formed, the powder is applied, for example, on a fiber-containing sheet, on a support, or on a precursor of a three-dimensional object that has already been formed.

A method for forming the powder layer is the same as those described in the embodiments A.

«Powder»

The powder includes a raw material of a ceramics.

The powder may include a resin. The resin is used for binding, for example, the powder layer and the fiber-containing sheet. Moreover, the resin is used for, for example, binding the powder and the powder.

The powder is the same as those described in the embodiments A.

-Resin included in powder-

The resin included in the powder contributes to, for example, binding the powder layer and the fiber-containing sheet, binding the powder and the powder, and binding the powder and the fibers.

The resin is the same as those described in the embodiments A.

<Step B2 and unit B2>

A step B2 (fiber-containing sheet disposing step) is not particularly limited and may be appropriately selected depending on the intended purpose, so long as it is a step of disposing a fiber-containing sheet.

A unit B2 (fiber-containing sheet disposing unit) is not particularly limited and may be appropriately selected depending on the intended purpose, so long as it is a unit configured to dispose a fiber-containing sheet.

When the fiber-containing sheet is disposed, the fiber-containing sheet is disposed, for example, on a powder layer, on a support, or on a precursor of a three-dimensional object that has already been formed.

The fiber-containing sheet may have a sheet form or may have a continuous sheet form. When the fiber-containing sheet has a continuous sheet form, the fiber-containing sheet is stored in the state of being wound in the form of a roll, and is used by, for example, pulling the sheet from the roll.

«Fiber-containing sheet»

The fiber-containing sheet includes fibers, and further includes a resin if necessary.

The fiber-containing sheet is a sheet containing, for example, a resin and the fibers dispersed in the resin.

In the fiber-containing sheet, fibers are preferably oriented.

<<<Fibers>>>

The fibers are formed of, for example, an inorganic material.

Here, the fibers mean a substance having a thin and long shape such as an acicular shape, a bar shape, and a fibrous shape.

-Inorganic material-

Examples of the inorganic material include glass, metal oxide, metal carbide, and metal nitride.

Examples of the metal oxide include zirconia, alumina, and mullite (aluminosilicate mineral).

Examples of the metal carbide include silicon carbide and tungsten carbide.

Examples of the metal nitride include silicon nitride and aluminum nitride.

These may be used alone or in combination.

Among them, silicon carbide, alumina, and mullite are preferable in terms of specific strength at high temperatures and resistance to environment.

As the inorganic material, a material that has been subjected to heat resistant coating with, for example, boron nitride or carbon as a pretreatment may be used.

-Resin included in sheet-

The resin included in the fiber-containing sheet contributes to, for example, binding the powder layer and the fiber-containing sheet.

The kind of resin is not particularly limited and may be appropriately selected depending on the intended purpose. Examples thereof include acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, $\alpha$-olefin/maleic anhydride-based copolymer, esterified substances of $\alpha$-olefin/maleic anhydride-based copolymer, polystyrene, poly(meth)acrylic acid ester, $\alpha$-olefin/maleic anhydride/vinyl group-containing monomer copolymer, styrene/maleic anhydride copolymer, styrene/(meth)acrylic acid ester copolymer, polyamide, epoxy resins, xylene resins, ketone resins, petroleum resins, rosin or its derivatives, coumarone indene resins, terpene resins, polyurethane resins, synthetic rubbers such as styrene/butadiene rubber, polyvinyl butyral, nitrile rubber, acryl rubber, and ethylene/propylene rubber, and nitrocellulose.

The resin included in the fiber-containing sheet may be the same resin as the resin included in the powder or may be different from the resin included in the powder. However, the resin included in the fiber-containing sheet is preferably the same resin as the resin included in the powder because the powder layer and the fiber-containing sheet are more strongly bound.

When the fiber-containing sheet contains a resin, an amount of the resin in the fiber-containing sheet is not particularly limited and may be appropriately selected depending on the intended purpose. The amount is preferably 10% by mass or more but 50% by mass or less, more preferably 20% by mass or more but 40% by mass or less in order to prevent cracks of a produced product, formation of defects, and deformation.

An average thickness of the fiber-containing sheet is not particularly limited and may be appropriately selected depending on the intended purpose. The average thickness per one layer is preferably 10 $\mu$m or more but 300 $\mu$m or less, more preferably 50 $\mu$m or more but 150 $\mu$m or less.

<<<Method for producing fiber-containing sheet>>>

A method for producing a fiber-containing sheet is not particularly limited and may be appropriately selected depending on the intended purpose. Examples of the method include the melt extrusion molding method, the calendaring drawing method, and the lamination method.

In these methods, after a mixture obtained by dispersing fibers in, for example, a resin, a fiber-containing sheet is obtained by molding the mixture in the form of a sheet, by various methods.

When the mixture obtained by dispersing fibers in a resin is drawn to form a sheet, the mixture is allowed to pass through fine roughness or slit. As a result, the fibers can be oriented in the fiber-containing sheet.

<Step B3 and unit B3>

A step B3 (liquid applying step) is not particularly limited and may be appropriately selected depending on the intended purpose, so long as it is a step of applying, to a predetermined region, liquid for binding the powder layer and the fiber-containing sheet.

A unit B3 (liquid applying unit) is not particularly limited and may be appropriately selected depending on the intended purpose, so long as it is a unit configured to apply, to a predetermined region, liquid for binding the powder layer and the fiber-containing sheet.

The predetermined region is, for example, a region where the three-dimensional object is finally to be formed.

The binding the powder layer and the fiber-containing sheet is preferably performed via the resin.

The resin used for binding the powder layer and the fiber-containing sheet is contained in at least one selected from the group consisting of the powder layer before drying, the fiber-containing sheet before drying, and the liquid.

Examples of a method for applying the liquid to the predetermined region include the dispenser method, the spray method, and the inkjet method. In order to perform these methods, a known device can be suitably used as a unit B3.

Among them, the dispenser method is excellent in a quantitative property of liquid droplets, but a coating area obtained by the dispenser method is small. The spray method can easily form a fine discharged object, can achieve a large coating area, and is excellent in a coating property. However, its quantitative property of liquid droplets is bad, and scattered powder material occurs by a spray flow.

Therefore, the inkjet method is particularly preferable. The inkjet method is advantageous because the quantitative property of liquid droplets is better than the spray method and the coating area can be larger than the dispenser method. The inkjet method is preferable because it can accurately and efficiently form a complex three-dimensional object.

In the case of the inkjet method, the unit B3 includes a nozzle that can apply liquid to a predetermined region by the inkjet method. Here, as the nozzle, a nozzle (discharge head) in a known inkjet printer can be suitably used, and the inkjet printer can be suitably used as the unit B3. Suitable examples of the inkjet printer include SG7100 available from Ricoh Company, Ltd. The inkjet printer is preferable because an amount of liquid that can be discharged at one time from a head part is large, the coating area is large, and the coating can be performed rapidly.

<<Liquid>>

The liquid is not particularly limited and may be appropriately selected depending on the intended purpose, so long as it is liquid for binding the powder layer and the fiber-containing sheet.
The liquid includes, for example, a solvent, and includes other components such as a resin if necessary.
For example, the resin used for binding the powder layer and the fiber-containing sheet is included in at least one of the powder and the fiber-containing sheet, the liquid may include a resin, or may not include a resin.
The liquid is the same as those described in the embodiments A.
The order of the step B1 (a powder layer forming step), the step B2 (fiber-containing sheet disposing step), and the step B3 (liquid applying step) is not particularly limited and may be appropriately selected depending on the intended purpose, so long as a precursor of a three-dimensional object containing the liquid can be obtained. Examples of the order include the following orders.

(1) the order of the step B1, the step B2, and the step B3
(2) the order of the step B1, the step B3, and the step B2
(3) the order of the step B2, the step B1, and the step B3
(4) the order of the step B2, the step B3, and the step B1

When the step B1, the step B2, and the step B3 are repeated in either of the aforementioned orders, a lamination unit of the powder layer and the fiber-containing sheet can be laminated to obtain a precursor of a three-dimensional object containing the liquid.

(1) Order of step B1, step B2, and step B3

In the case of the order (1), a powder layer is formed (step B1). When the powder layer is formed, the powder is applied, for example, on a support or on a precursor of a three-dimensional object that has already been formed.
Next, a fiber-containing sheet is disposed on the powder layer (step B2).
Then, liquid is applied to a predetermined region of the fiber-containing sheet (step B3).

(2) Order of step B1, step B3, and step B2

In the case of the order (2), a powder layer is formed (step B1). When the powder layer is formed, the powder is applied, for example, on a support or on a precursor of a three-dimensional object that has already been formed.
Next, liquid is applied to a predetermined region on the powder layer (step B3).
Then, a fiber-containing sheet is disposed on the powder layer (step B2).

(3) Order of step B2, step B1, and step B3

In the case of (3), a fiber-containing sheet is disposed (step B2). The fiber-containing sheet is disposed, for example, on a support or on a precursor of a three-dimensional object that has already been formed.
Next, a powder layer is formed on the fiber-containing sheet (step B1).
Then, liquid is applied to a predetermined region of the powder layer (step B3).

(4) Order of step B2, step B3, and step B1

In the case of (4), a fiber-containing sheet is disposed (step B2). The fiber-containing sheet is disposed, for example, on a support or on a precursor of a three-dimensional object that has already been formed.
Next, liquid is applied to a predetermined region of the fiber-containing sheet (step B3).
Then, a powder layer is formed on the fiber-containing sheet (step B1).
When at least one of the fiber-containing sheet and the powder includes a resin used for binding the powder layer and the fiber-containing sheet, the resin is dissolved by the liquid for binding the powder layer and the fiber-containing sheet. Then, after drying is performed to remove volatile components (e.g., solvent) in the liquid, the powder layer and the fiber-containing sheet are bound via the resin.

Meanwhile, when the liquid and the fiber-containing sheet include a resin used for binding the powder layer and the fiber-containing sheet, the liquid dissolves the resin of the fiber-containing sheet. Moreover, the liquid enters a gap in the powder layer. The liquid enters an interface between the powder layer and the fiber-containing sheet. Then, after drying is performed to remove volatile components (e.g., solvent) in the liquid, the powder layer and the fiber-containing sheet are bound via the resin.

<Step B4 and unit B4>

A step B4 (binding step) is not particularly limited and may be appropriately selected depending on the intended purpose, so long as it is a step (binding step) of drying a precursor of a three-dimensional object containing the liquid that is obtained by performing the step B1, the step B2, and the step B3, to bind the powder layer and the fiber-containing sheet. The step B4 (binding step) can be performed by, for example, a known dryer.

A unit B4 (binding unit) is not particularly limited and may be appropriately selected depending on the intended purpose, so long as it is a unit (binding unit) configured to dry a precursor of a three-dimensional object containing the liquid that is obtained using the unit B1, the unit B2, and the unit B3, to bind the powder layer and the fiber-containing sheet. Examples of the unit B4 include known dryers.

In the step B4, the precursor of the three-dimensional object containing the liquid is dried. At this time, when the solvent in the liquid is volatilized, a resin dissolved in the solvent is solidified to bind the powder layer and the fiber-containing sheet via the resin.

The step B4 may be performed on the precursor of the three-dimensional object obtained by undergoing one cycle of the step B1, the step B2, and the step B3. In this case, the precursor of the three-dimensional object may be, for example, a lamination unit of the powder layer and the fiber-containing sheet itself. In this case, for example, the step B4 is performed per one cycle of the step B1, the step B2, and the step B3.

The step B4 may be performed on the precursor of the three-dimensional object obtained by repeating one cycle of the step B1, the step B2, and the step B3. In this case, the precursor of the three-dimensional object may be a lamination structure in which a plurality of lamination units are laminated.

A drying temperature is not particularly limited and may be appropriately selected depending on the intended purpose. The drying temperature is preferably 50°C or more but 200°C or less.

A drying time is not particularly limited and may be appropriately selected depending on the intended purpose. The drying time is preferably 1 hour or more but 48 hours or less.

When a boiling point of the volatile component contained in the liquid is low or when volatility of the volatile component contained in the liquid is high, the step B4 may be air drying. That is, the step B4 may be a step of leaving the precursor of the three-dimensional object containing the liquid to stand, to dry the precursor of the three-dimensional object containing the liquid.

<Step B5 and unit B5>

The step B5 (heating step) is not particularly limited and may be appropriately selected depending on the intended purpose, so long as it is a step of heating the precursor of the three-dimensional object dried. The step B5 (heating step) may be performed using, for example, a known heating device.

The unit B5 (heating unit) is not particularly limited and may be appropriately selected depending on the intended purpose, so long as it is a unit configured to heat the precursor of the three-dimensional object dried. Examples of the unit B5 (heating unit) include known heating devices.

In one aspect, the heating in the step B5 and the unit B5 is heating for sintering the precursor of the three-dimensional object.

In another aspect, the heating in the step B5 and the unit B5 functions as decomposition and removal of the resin and sintering of the precursor of the three-dimensional object.

In the heating, the decomposition and removal of the resin and the sintering of the precursor of the three-dimensional object may be performed at one time or may be separately performed. It is preferable to perform the decomposition and removal of the resin and the sintering of the precursor of the three-dimensional object at one time because steps can be shortened.

When the decomposition and removal of the resin and the sintering of the precursor of the three-dimensional object are performed at one time, the following procedure may be employed. Specifically, for example, a precursor of a three-dimensional object is heated to a temperature at which the resin can be decomposed and removed, followed by retaining the temperature for a certain time. After the resin is decomposed to remove the resin from the precursor of the three-dimensional object, the precursor of the three-dimensional object is heated to a sintering temperature of the raw material of the ceramics used, to sinter the precursor of the three-dimensional object.

When the decomposition and removal of the resin and the sintering of the precursor of the three-dimensional object are separately performed, the following procedure may be employed. Specifically, for example, a precursor of a three-dimensional object is heated to a temperature at which the resin can be decomposed and removed, followed by retaining the temperature for a certain time. After the resin is decomposed to remove the resin from the precursor of the three-dimensional object, the resultant is temporarily cooled (e.g., standing to cool). Then, the precursor of the three-dimensional object is heated to a sintering temperature of the raw material of the ceramics used, to sinter the precursor of the three-dimensional object. That is, the sintering treatment is performed after the resin decomposition treatment.

An atmosphere in the heating for decomposing and removing the resin is not particularly limited and may be appropriately selected depending on the intended purpose. Examples of the atmosphere include inert atmospheres (e.g., nitrogen atmosphere and argon atmosphere).

A heating temperature and heating time for decomposing and removing the resin are not particularly limited and may be appropriately selected depending on the intended purpose, so long as the heating temperature is a temperature at which the resin can be decomposed and removed, and the heating time is time for which the resin can be decomposed and removed. The heating temperature is, for example, 150°C or more but 700°C or less, and the heating time is, for example, 0.5 hours or more but 24 hours or less.

The atmosphere in the sintering is not particularly limited and may be appropriately selected depending on the intended purpose. Examples of the atmosphere include inert atmospheres (e.g., nitrogen atmosphere and argon atmosphere).

A heating temperature and heating time of the sintering are not particularly limited and may be appropriately selected depending on the intended purpose, so long as the heating temperature is a temperature at which sintering can be performed and the heating time is time for which sintering can be performed. The heating temperature is, for example, 800°C or more but 2000°C or less, and the heating time is, for example, 0.5 hours or more but 12 hours or less.

<Other steps and other units>

A step of removing unnecessary powder layer and unnecessary fiber-containing sheet as a step B6 may be performed between the step B4 and the step B5.

An apparatus for producing a three-dimensional object may include a unit configured to remove unnecessary powder layer and unnecessary fiber-containing sheet as a unit B6.

Examples of the step B6 include a step of removing the unnecessary powder layer attached around the precursor of the three-dimensional object using, for example, an air spray or a brush.

Examples of the step B6 include a step of holding and removing the unnecessary fiber-containing sheet around the precursor of the three-dimensional object using, for example, a member that can hold a sheet.

Examples of the unit B6 include an air spray, a brush, and a member that can hold a sheet.

Examples of a method for producing a three-dimensional object and an apparatus for producing a three-dimensional object will be described with reference to the drawings.

FIG. 1 is a schematic view relating to production of a three-dimensional object.

FIG. 1 illustrates an apparatus for producing a three-dimensional object 100 and a computer 103. The apparatus for producing a three-dimensional object 100 includes a three-dimensional object part 101 and a post-treatment part 102.

In production of a three-dimensional object, 3D data of a three-dimensional object are sent from the computer 103 to the three-dimensional object part 101, and molding is performed based on the 3D data in the three-dimensional object part 101. Then, a post-treatment such as heating is performed in the post-treatment part 102 to complete a three-dimensional object.

Examples of a method for producing a three-dimensional object and an apparatus for producing a three-dimensional object will be described.

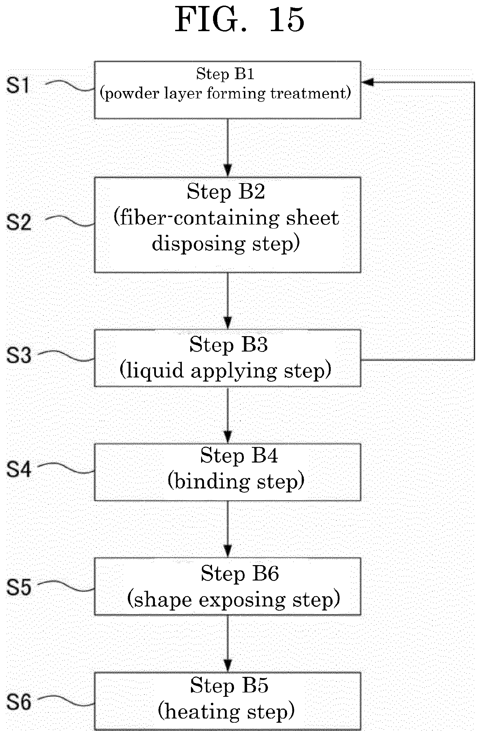

FIG. 15 is a flowchart of one example of a method for producing a three-dimensional object.

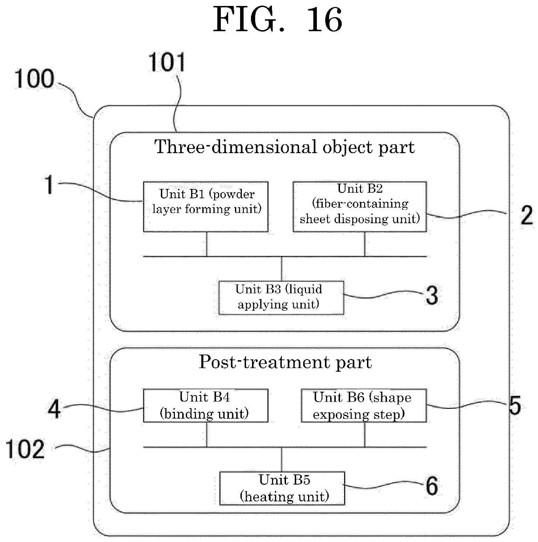

FIG. 16 is a functional block diagram of one example of an apparatus for producing a three-dimensional object.

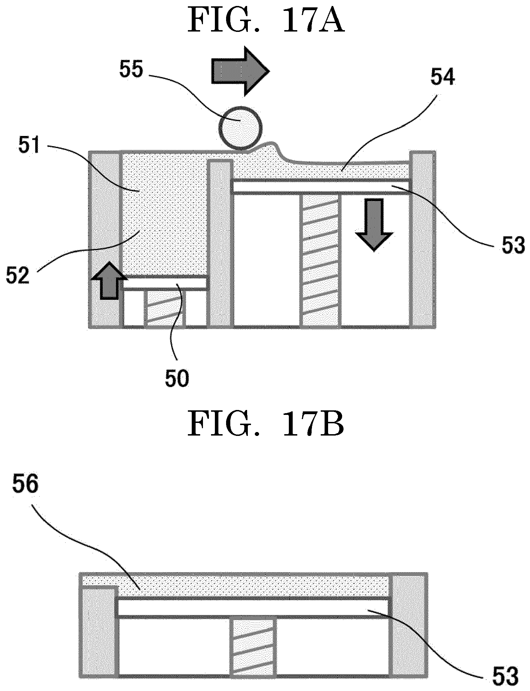

FIG. 17A to FIG. 17K are each a schematic view for presenting one example of a method for producing a three-dimensional object.

An apparatus for producing a three-dimensional object 100 in FIG. 16 includes a three-dimensional object part 101 and a post-treatment part 102. The three-dimensional object part 101 includes: a powder layer forming unit as a unit B1 denoted by reference numeral 1; a fiber-containing sheet disposing unit as a unit B2 denoted by reference numeral 2; and a liquid applying unit as a unit B3 denoted by reference numeral 3. The post-treatment part 102 includes: a binding unit as a unit B4 denoted by reference numeral 4; a shape exposing unit as a unit B6 denoted by reference numeral 5; and a heating unit as a unit B5 denoted by reference numeral 6.

In the flowchart of FIG. 15, the step B1 to the step B3 are performed in the order of the step B1, the step B2, and the step B3.

<Step S1>

First, the step B1 (a powder layer forming step) is performed (S1). In the step B1, a powder layer is formed by powder that contains a raw material of a ceramics (S1). The step B1 is performed using, for example, the unit B1 (a powder layer forming unit) 1. The unit B1 (a powder layer forming unit) 1 includes: powder 51; a powder storing tank 52 at supply side that stores the powder 51; a powder storing tank 54 at production side configured to form a powder layer; and a leveling mechanism 55, as presented in FIG. 17A. The powder storing tank 52 at supply side includes a stage 50 that can go up and down. The powder storing tank 54 at production side includes a stage 53 that can go up and down. When the leveling mechanism 55 moves from the powder storing tank 52 at supply side to the powder storing tank 54 at production side, the powder 51 in the powder storing tank 52 at supply side moves to the powder storing tank 54 at production side, to form a powder layer 56 on the stage 53 (FIG. 17B).

<Step S2>

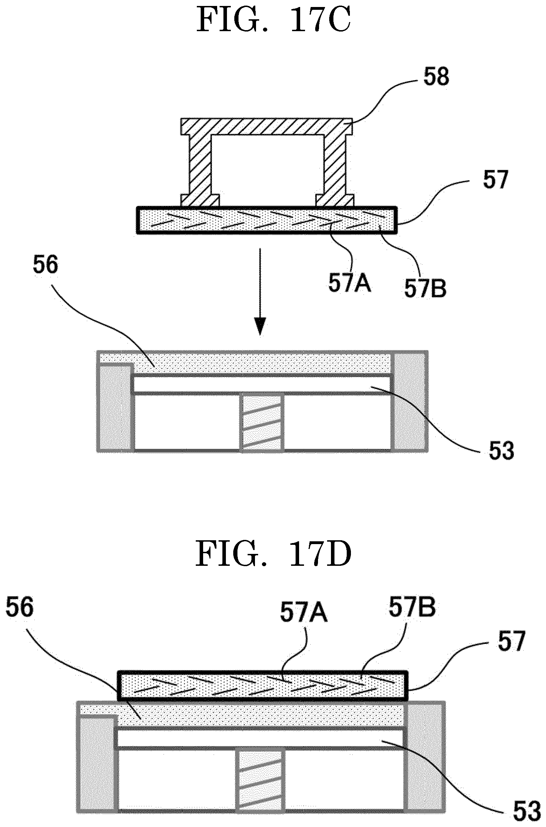

Subsequently, a step B2 (fiber-containing sheet disposing step) is performed (S2). In the step B2, a fiber-containing sheet is disposed on the powder layer 56. The step B2 is performed using, for example, a unit B2 (fiber-containing sheet disposing unit) 2. The unit B2 denoted by reference numeral 2 is, for example, a suction nozzle 58 that can suck a sheet as presented in FIG. 17C. A fiber-containing sheet 57 includes a resin 57B and fibers 57A dispersed in the resin 57B. In the step B2, for example, the fiber-containing sheet 57 is sucked by the suction nozzle 58, and the suction nozzle 58 moves the fiber-containing sheet 57 onto the powder layer 56. Then, the suction is released to dispose the fiber-containing sheet 57 on the powder layer 56 (FIG. 17D).

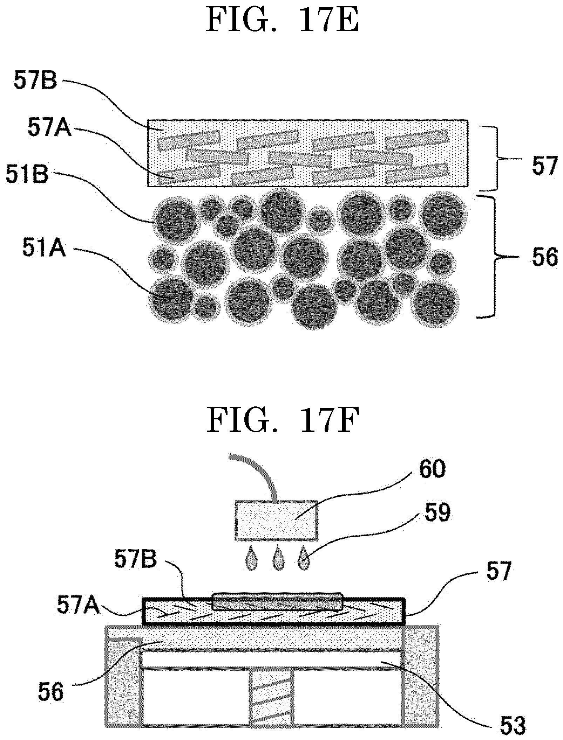

Here, a cross-sectional view in which the powder layer 56 and the fiber-containing sheet 57 applied on the powder layer 56 are enlarged is presented (FIG. 17E). The powder 51 constituting the powder layer 56 includes a raw material of a ceramics 51A and a resin 51B. The resin 51B covers the raw material of the ceramics 51A. The fibers 57A constituting the fiber-containing sheet 57 are formed of an inorganic material having a thin and long shape and is dispersed in the resin 57B. Note that, the powder 51 may be formed of only the raw material of the ceramics.

When the fiber-containing sheet 57 is excellent in flexibility, the fiber-containing sheet 57 is stored in the form of a roll, and may be drawn from the roll to dispose it on the powder layer.

<Step S3>

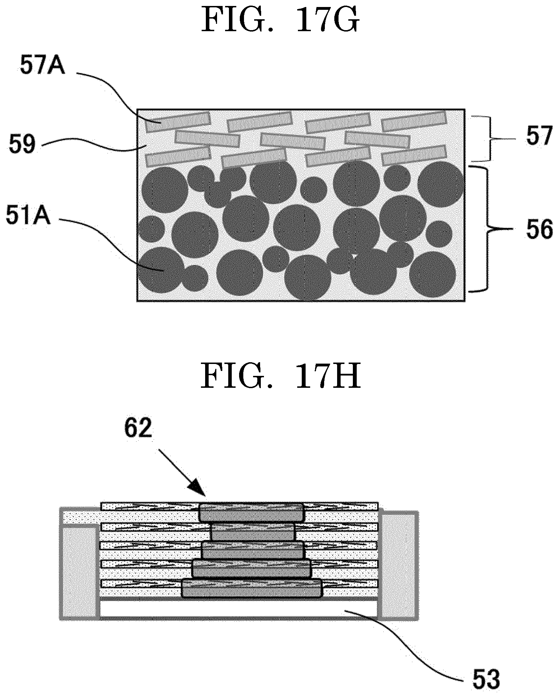

Subsequently, a step B3 (liquid applying step) is performed. In the step B3, liquid for binding the powder layer and the fiber-containing sheet is applied to a predetermined region (S3). The step B3 is performed using, for example, a unit B3 (liquid applying unit) 3. The unit B3 (liquid applying unit) 3 is, for example, an inkjet nozzle 60 as presented in FIG. 17F. The inkjet nozzle 60 is used to apply liquid 59 to the predetermined region of the fiber-containing sheet 57. Here, a cross-sectional view in which the state obtained after application of the liquid 59 is enlarged is presented (FIG. 17G). The resin 51B contained in the powder 51 and the resin 57B contained in the fiber-containing sheet 57 are dissolved in the liquid 59.

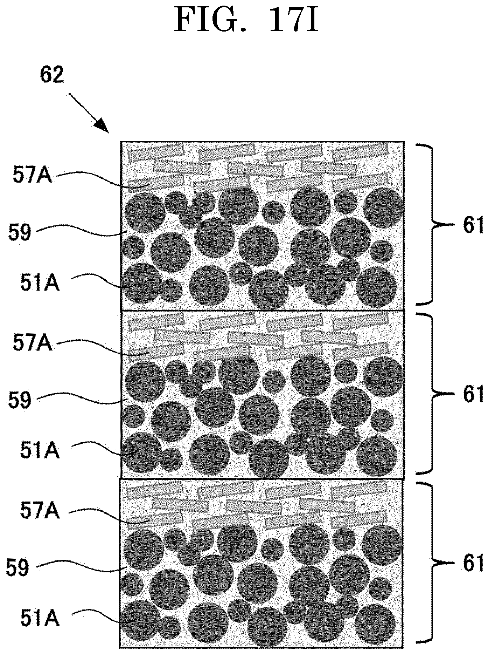

Subsequently, the step B1, the step B2, and the step B3 are repeated until a desired number of laminated layers is satisfied. As a result, as presented in FIG. 17H and FIG. 17I, it is possible to obtain, on the stage 53, a laminated layer structure (precursor 62 of a three-dimensional object containing the liquid) having a plurality of laminated layer units 61 to which the liquid 59 is applied.

<Step S4>

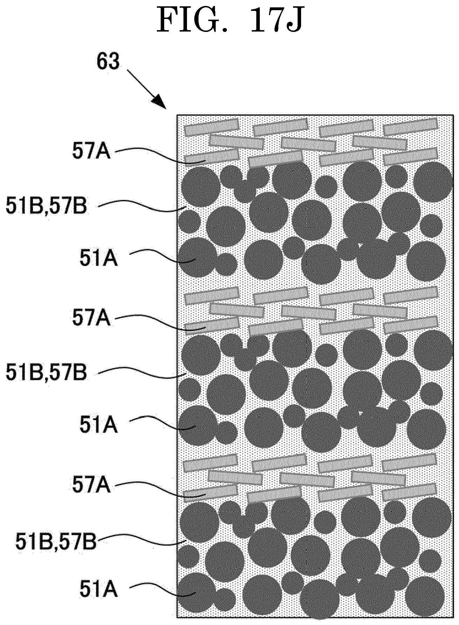

Subsequently, a step B4 (binding step) is performed. In the step B4, the precursor of the three-dimensional object containing the liquid that is obtained by performing the step B1, the step B2, and the step B3 is dried, to bind the powder layer and the fiber-containing sheet (S4). In this embodiment, the powder layer and the fiber-containing sheet are bound via a resin. The step B4 is performed by, for example, a unit B4 (binding unit) 4. The unit B4 (binding unit) 4 is, for example, a dryer. The precursor 62 of the three-dimensional object containing the liquid 59 is dried. At this time, when the solvent in the liquid 59 is volatilized, the resins 51B and 57B dissolved in the solvent are solidified to bind the powder layer 56 and the fiber-containing sheet 57 via the resins 51B and 57B (FIG. 17J). As a result, a precursor 63 of the three-dimensional object dried can be obtained.

<Step S5>

Subsequently, a step B6 (shape exposing step) is performed. In the step B6, unnecessary powder layer 56 attached around the precursor of the three-dimensional object is removed using, for example, an air spray or a brush.

Moreover, the unnecessary fiber-containing sheet 57 is removed using, for example, the suction nozzle (S5). As a result, a shape of the three-dimensional object in the precursor of the three-dimensional object is exposed.

The powder contained in the unnecessary powder layer can be reused by removing coarse particles through, for example, sieving.

The unnecessary fiber-containing sheet can be reused by forming a block of the softened resin and then processing the block to a sheet.

The precursor 63 of three-dimensionally produced dried is integrated by solidifying the resins 51B and 57B. Therefore, the unnecessary powder layer and the unnecessary fiber-containing sheet to which the liquid is not applied can be easily separated.

<Step S6>

Subsequently, a step B5 (heating step) is performed. In the step B5, the precursor of the three-dimensional object dried is heated (S6). The step B5 is performed using, for example, a unit B5 (heating unit) 6. The unit B5 (heating unit) 6 is, for example, a heating device. In the step B5 of the step S6, for example, decomposition and removal of the resin and sintering of the precursor of the three-dimensional object are performed at one time.

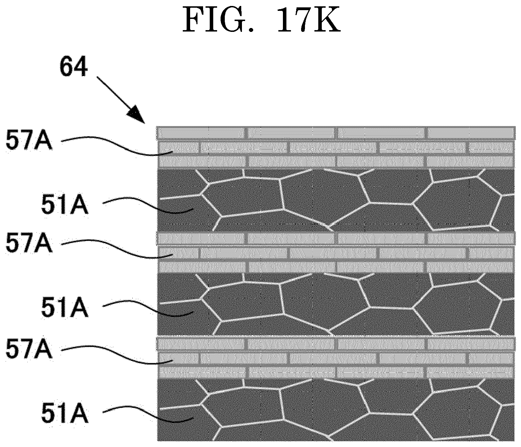

As a result, as presented in FIG. 17K, the raw material of the ceramics 51A is sintered, obtaining a three-dimensional object 64 in which the fibers 57A are disposed in the sintered body formed of the raw material of the ceramics 51A.

Next, another example of a method for producing a three-dimensional object will be described.

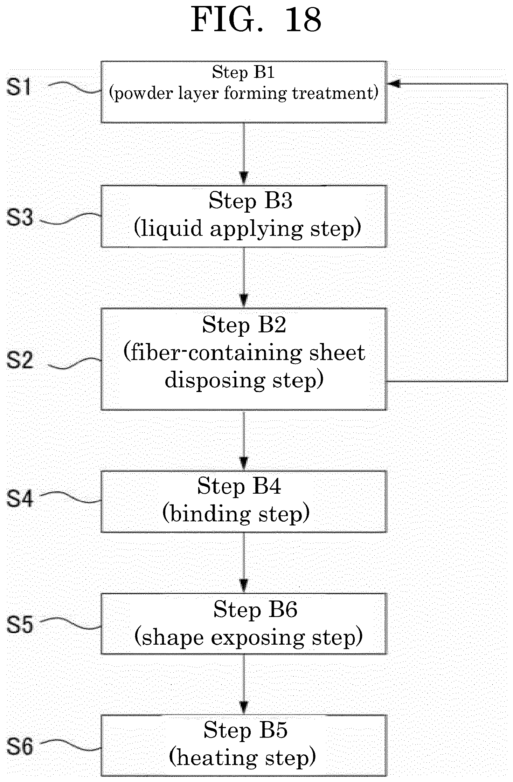

FIG. 18 is a flowchart of another example of a method for producing a three-dimensional object.

In the flowchart of FIG. 18, the step B1 to the step B3 are performed in the order of the step B1, the step B3, and the step B2. The other steps are the same as the steps in the flowchart of FIG. 15.

Next, another example of a method for producing a three-dimensional object will be described.

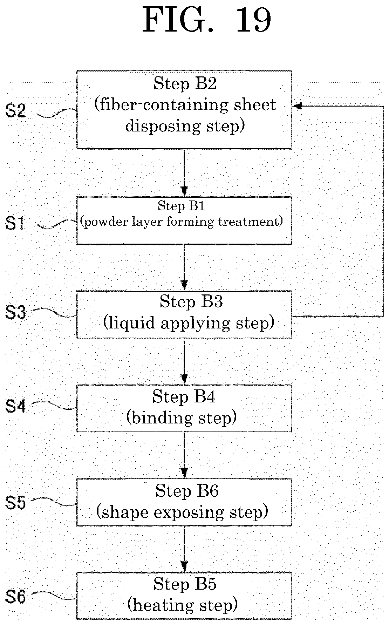

FIG. 19 is a flowchart of another example of a method for producing a three-dimensional object.

In the flowchart of FIG. 19, the step B1 to the step B3 are performed in the order of the step B2, the step B1, and the step B3. The other steps are the same as the steps in the flowchart of FIG. 15.

Next, another example of a method for producing a three-dimensional object will be described.

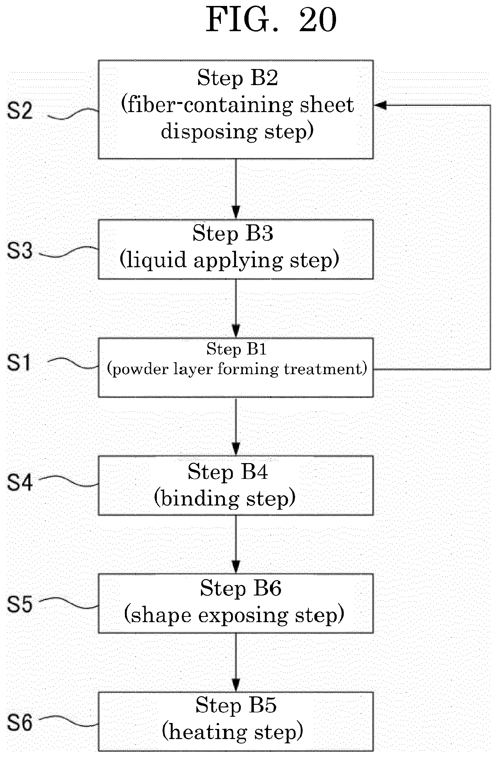

FIG. 20 is a flowchart of another example of a method for producing a three-dimensional object.

In the flowchart of FIG. 20, the step B1 to the step B3 are performed in the order of the step B2, the step B3, and the step B1. The other steps are the same as the steps in the flowchart of FIG. 15.

Next, another example of a method for producing a three-dimensional object will be described.

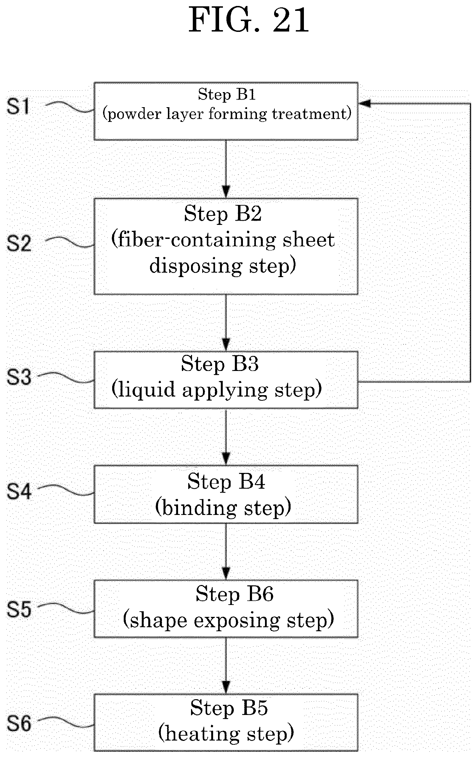

FIG. 21 is a flowchart of another example of a method for producing a three-dimensional object.

In the flowchart of FIG. 21, the step B1, the step B2, the step B3, and the step B4 are repeated to obtain a dried precursor of a three-dimensional object. The other steps are the same as the steps in the flowchart of FIG. 15.

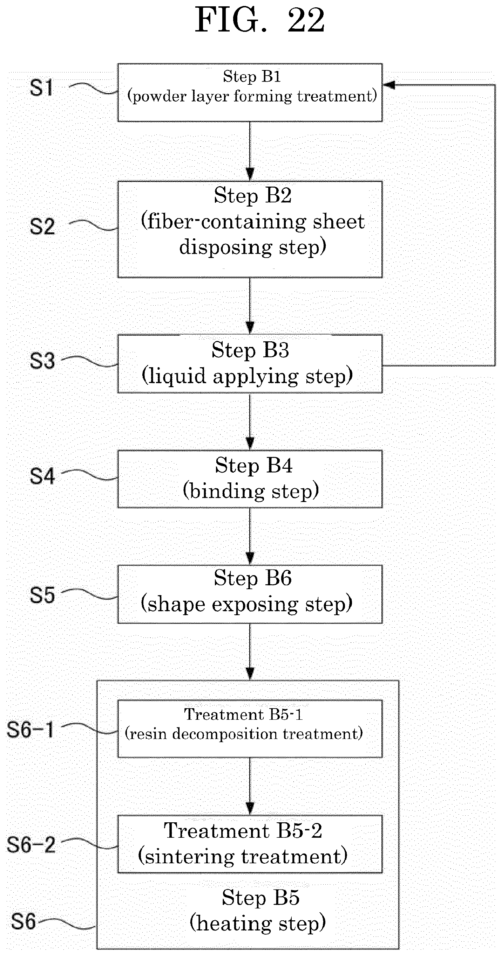

FIG. 22 is a flowchart of another example of a method for producing a three-dimensional object.

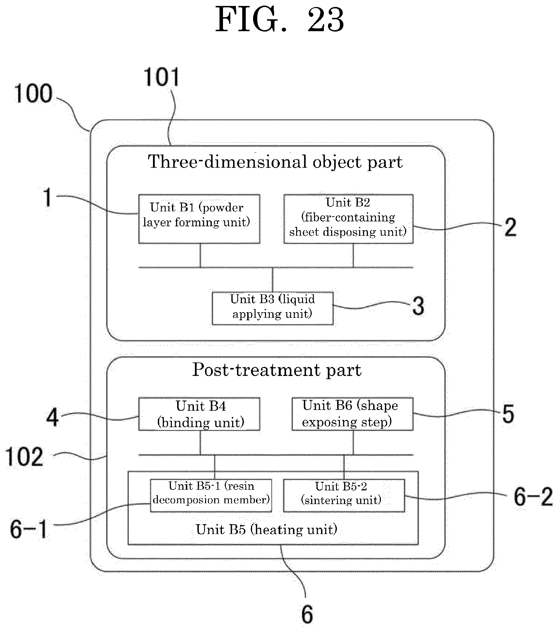

FIG. 23 is a functional block diagram of another example of an apparatus for producing a three-dimensional object.

In the flowchart of FIG. 22, as one aspect of the step B5 of the method for producing a three-dimensional object, a step S6-1 (treatment B5-1: resin decomposition treatment) and a step S6-2 (treatment B5-2: sintering treatment) are performed in the step S6 (step B5: heating step) in the flowchart of FIG. 15.

An apparatus for producing a three-dimensional object 100 in FIG. 23 includes a three-dimensional object part 101 and a post-treatment part 102. The three-dimensional object part 101 includes: a powder layer forming unit as a unit B1 denoted by reference numeral 1; a fiber-containing sheet disposing unit as a unit B2 denoted by reference numeral 2; and a liquid applying unit as a unit B3 denoted by reference numeral 3. The post-treatment part 102 includes: a binding unit as a unit B4 denoted by reference numeral 4; a shape exposing unit as a unit B6 denoted by reference numeral 5; and a heating unit as a unit B5 denoted by reference numeral 6. The unit B5 (heating unit) 6 includes: a resin decomposition member as a member B5-1 denoted by reference numeral 6-1; and a sintering member as a member B5-2 denoted by reference numeral 6-2.

<Step S6-1>

In the treatment B5-1 (resin decomposition treatment), the precursor of the three-dimensional object dried is heated to a temperature at which the resin can be decomposed and removed, and the resin included in the precursor of the three-dimensional object dried is decomposed to remove the resin from the precursor of the three-dimensional object dried (S6-1). The step B5-1 is performed using, for example, the member B5-1 (resin decomposition member) 6-1. The unit B5-1 (resin decomposition member) is, for example, a heating device.

<Step S6-2>

In the treatment B5-2 (sintering treatment), the precursor of the three-dimensional object is heated to a sintering temperature of the raw material of the ceramics used, to sinter the precursor of the three-dimensional object (S6-2). The step B5-2 is performed using a unit B5-2 (sintering unit) 6-2. The member B5-2 (sintering member) is, for example, a hating device that can heat a precursor of a three-dimensional object to a sintering temperature of the raw material of the ceramics.

(Three-dimensional object)

A three-dimensional object (laminated produced object) of the present disclosure is produced by a method of the present disclosure for producing a three-dimensional object or an apparatus of the present disclosure for producing a three-dimensional object.

The three-dimensional object is a ceramics that contains an inorganic material (fibers) having a thin and long shape such as an acicular shape, a bar shape, and a fibrous shape.

An amount of the inorganic material in the three-dimensional object is not particularly limited and may be appropriately selected depending on the intended purpose. The amount is preferably 15% by mass or more but 70% by mass or less, more preferably 30% by mass or more but 60% by mass or less, in order to improve a fracture toughness value.

Use of the three-dimensional object is not particularly limited and may be appropriately selected depending on the intended purpose. The three-dimensional object can be suitably used for materials having resistance to high temperatures such as a turbine blade of a jet engine, a turbine nozzle, and a liner member.

Examples

The present disclosure will be described below by way of Examples. However, the present disclosure should not be construed as being limited to these Examples.

(Example 1)

A three-dimensional object was produced in accordance with the flowchart presented in FIG. 15 and the method for producing a three-dimensional object presented in FIG. 17A to FIG. 17K.

Used was a product obtained by coating a KEMIT resin (saturated copolymer polyester) (obtained from Toray Industries, Inc.) as a coating resin on AS20 (main component: alumina, average particle diameter: 22 μm) (obtained from Showa Denko K.K.) as powder. A rate of the coated resin included in the powder was adjusted to 10% by mass. A spin coater was used for coating. A rate of the coated resin in the powder was adjusted so as to be 10% by mass. A spin coater was used for coating.

In order to produce a fiber-containing sheet, FIBERMAX (chemical formulation: 72% of alumina and 28% of silica, fiber diameter of from 4 μm through 6 μm, and central fiber length of 200 μm) (obtained from ITM Co., Ltd.) as fibers and a KEMIT resin (saturated copolymer polyester) (obtained from Toray Industries, Inc.) as a binding agent were used as raw materials. The fibers were subjected to boron nitride coating in a predetermined amount. Then, the fibers and the saturated copolymer polyester were adjusted at predetermined rates, and the resultant was subjected to the wet blending together with a solvent and zirconia beads as a stirrer. The zirconia beads were removed from the mixture solution to prepare a slurry. The slurry was dried to adjust it to a predetermined viscosity, and was coated on a PET (polyethylene terephthalate) film using a doctor blade, followed by drying. Then the PET film was removed to produce a fiber-containing sheet. The doctor blade was designed so that the fibers would be oriented at the time of coating, by providing grooves having a depth of 50 μm at 100 μm intervals. A thickness of the completed fiber-containing sheet was 80 μm. As the material formulation of the sheet, a mass ratio (resin: fibers) between the resin and the fibers was 1:3.

As liquid (ink), ethyl acetate that was a main solvent was used. As a dispersant, SN DISPERSANT 5468 (obtained from San Nopco Limited) was used. As particles in the ink, AKP3000 (alumina, center particle diameter of 400 nm) (obtained from SUMITOMO CHEMICAL COMPANY, LIMITED) was used. These materials were stirred for 24 hours to be used.

As the step B1 (a powder layer forming step), the powder was spread on a stage 53 using a counter roller to form a powder layer having an average thickness of 80 μm in accordance with FIG. 17A and FIG. 17B.

Next, as the step B2 (fiber-containing sheet disposing step), a fiber-containing sheet was disposed on the powder layer in accordance with FIG. 17C to FIG. 17E.

As the step B3 (liquid applying step), the liquid was applied to a predetermined region of the fiber-containing sheet in accordance with FIG. 17F and FIG. 17G. An amount of the liquid applied was 1,500 dpi.

The step B1 to the step B3 were repeated 50 times to produce a precursor of a three-dimensional object containing the liquid as presented in FIG. 17H and FIG. 17I.

As the step B4 (binding step), the precursor of the three-dimensional object containing the liquid was dried at 100°C for 4 hours to obtain the precursor of the three-dimensional object dried as presented in FIG. 17J.

As the step B6 (shape exposing step), the precursor of the three-dimensional object dried was taken out from a movable molding tank. Then, the precursor of the three-dimensional object dried, and the powder layer and the fiber-containing sheet around the precursor to which the liquid had not been applied were separated.

As the step B5 (heating step), the precursor of the three-dimensional object dried was heated at 1,600°C for 1 hour, and sintering was performed while the resin was decomposed and removed to obtain a three-dimensional object that was a sintered body as presented in FIG. 17K.

[Evaluations]

The following evaluations were performed.

<Recyclability of powder and fiber-containing sheet>

Recyclability of the powder layer (powder) and the fiber-containing sheet to which the liquid had not been applied was as follows.

As the step B6 (shape exposing step), the precursor of the three-dimensional object dried was taken out from a movable molding tank. Then, the precursor of the three-dimensional object dried, and the powder layer and the fiber-containing sheet around the precursor to which the liquid had not been applied were separated.

As a result, the powder layer (powder) and the fiber-containing sheet around the precursor of the three-dimensional object dried, to which the liquid had not been applied, could be each collected without mixing the powder layer (powder) and the fiber-containing sheet.

The powder could be reused by subjecting it to sieving and then removing coarse particles.

Because the fiber-containing sheet had a recess shape at its center corresponding to a region to which the liquid had been applied, it was heated to a temperature at which the resin was softened, to temporarily form a block. Then, the fiber-containing sheet having a predetermined thickness and a predetermined width was reproduced by the melt extrusion molding method. The reproduced fiber-containing sheet was similar to the non-reproduced fiber-containing sheet, and could be reused.

<Fracture toughness value>

The SEVNB method (Single Edge V-Notch Beam method) is useful to evaluate the fracture toughness value of the sintered body. The SEVNB method according to the ISO6872 is a method for determining the fracture toughness value by making a V-shaped notch on a center of the surface of a test piece using a diamond wheel having a special shape, and subjecting the test piece to the three-point bending test.

The test piece for the SEVNB method was formed in the following manner. Specifically, a semi-sintered body block (23 (width) mm $\times$ 19 (thickness) mm $\times$ 60 (length) mm) was sintered at a maximum temperature of 1500°C for 2 hours according the conditions specified by a maker. Then, a test piece was cut out from the sintered block so as to have a size of 3 (width) mm $\times$ 4 (thickness) mm $\times$ 24 (length) mm. The surface of the cut test piece was polished with water-resistant abrasive paper (#150, #400, and #600), and was subjected to notch processing on a center of the test piece according to the ISO 6872 using a form grinding machine (Okamoto Machine ToolWorks, Gunma, Japan) with a diamond wheel #400 of a V-shaped resin bond under the following conditions: cutting speed of 35 minutes/test piece; cutting depth of 1 $\mu$m; and poured water of a normal temperature. The notch had a depth of 1.0 mm, an angle of 20°, and a R tip (25 $\mu$m or less). Here, the edge angle of the test piece was slightly obtuse due to the cutting out from the block.

The measurement method of the SEVNB method is as follows. A precision force measuring device (PL-300, Maruhishi, Tokyo, Japan) was used to perform the experiments at a difference between fulcrums of 15 mm under the following two conditions: cross head speed of 0.5 mm/min and 1.0 mm/min. The experiments were performed 10 times, 5 times under each condition. The following formula (1) in the ISO6872 was used to calculate the fracture toughness value KIC from the obtained measurement.

$$K_{IC} = \frac{F}{b\sqrt{w}} \cdot \frac{S}{w} \cdot \frac{3\sqrt{\alpha}}{2(1-\alpha)^{1.5}} Y$$

KIC: fracture toughness value (MPa·m$^{1/2}$), F: fracture load (MN) = bending fracture stress (kgf) $\times$ 9.80665$\times10^6$, S: difference between fulcrums (m), b: sample thickness (m), $\alpha$: a/w= notch depth (m)/ sample width (m), Y: 1.9472-5.0247$\alpha$+ 11.8954$\alpha^2$-18.0635$\alpha^3$+ 14.9586$\alpha^4$-4.6896$\alpha^5$

As a result, the fracture toughness value was 15 (MPa·m$^{1/2}$).

(Comparative Example 1)

A sintered body was obtained in the same manner as in Example 1 except that the step B2 (fiber-containing sheet disposing step) was not performed and the amount of the liquid applied to the predetermined region in the step B3 (liquid applying step) was changed to 1,200 dpi.

That is, in Comparative Example 1, a sintered body was obtained by laminating the powder layer, followed by binding and sintering.

The sintered body of Comparative Example 1 was measured for the fracture toughness value in the same manner as in Example 1. As a result, the fracture toughness value was 4 (MPa·m$^{1/2}$).

Aspects of the present disclosure are as follows, for example.

<1> A method for producing a three-dimensional object, the method including:

a step (1) of disposing powder;
a step (2) of disposing fibers; and
a step (3) of applying liquid for binding the powder and the fibers to at least one selected from the group consisting of the powder and the fibers.

<2> The method for producing a three-dimensional object according to <1>,
wherein the step (1) and the step (2) are a step A1-1 of forming a lamination unit of a powder layer containing the powder and a fiber layer containing the fibers, and
the step (3) is a step Al-2 of applying liquid for binding the powder layer and the fiber layer to any region of the lamination unit.
<3> The method for producing a three-dimensional object according to <2>, further including
a step A1-3 of drying a precursor of a three-dimensional object containing the liquid that is obtained by performing the step A1-1 and the step A1-2, to bind the powder layer and the fiber layer.
<4> The method for producing a three-dimensional object according to <3>, further including
a step A1-4 of heating the precursor of the three-dimensional object dried.
<5> The method for producing a three-dimensional object according to any one of <1> to <4>,
wherein the fibers are applied on a target surface using a non-contact member that does not come into contact with the target surface, to form the fiber layer.
<6> The method for producing a three-dimensional object according to <1>,
wherein the step (1) and the step (2) are a step A2-1 of applying a powder-fiber mixture of the powder and the fibers on a target surface, to form a powder-fiber mixture layer; and
the step (3) is a step A2-2 of applying liquid for binding at least one selected from the group consisting of between the powder and the powder, between the fibers and the fibers, and between the powder and the fibers, to any region of the powder-fiber mixture layer.
<7> The method for producing a three-dimensional object according to <6>, further including
a stepA2-3 of drying a precursor of a three-dimensional object containing the liquid that is obtained by performing the step A2-1 and the step A2-2, to bind at least one selected from the group consisting of between the powder and the powder, between the fibers and the fibers, and between the powder and the fibers.
<8> The method for producing a three-dimensional object according to <7>, further including
a step A2-4 of heating the precursor of the three-dimensional object dried.
<9> The method for producing a three-dimensional object according to <6> to <8>,
wherein the step A2-1 is applying the powder-fiber mixture on the target surface using a non-contact member that does not come into contact with the target surface.
<10> The method for producing a three-dimensional object according to <6> to <9>,
wherein at least one selected from the group consisting of the powder and the fibers includes a resin.
<11> The method for producing a three-dimensional object according to <1>,

wherein the step (1) is a step B1 of forming a powder layer including the powder,
the step (2) is a step B2 of disposing a fiber-containing sheet that contains the fibers, and
the step (3) is a step B3 of applying liquid for binding the powder layer and the fiber-containing sheet to a predetermined region.

<12> The method for producing a three-dimensional object according to <11>, further including a step B4 of drying a precursor of a three-dimensional object containing the liquid that is obtained by performing the step B1, the step B2, and the step B3, to bind the powder layer and the fiber-containing sheet.

<13> The method for producing a three-dimensional object according to <12>, further including a step B5 of heating the precursor of the three-dimensional object dried.

<14> The method for producing a three-dimensional object according to any one of <11> to <13>, wherein the fiber-containing sheet includes a resin and the fibers dispersed in the resin.

<15> The method for producing a three-dimensional object according to any one of <11> to <14>, wherein the powder includes a raw material of a ceramics.

<16> The method for producing a three-dimensional object according to any one of <1> to <8>, wherein the liquid includes a resin.

<17> An apparatus for producing a three-dimensional object, the apparatus including:

a unit (1) configured to dispose powder;
a unit (2) configured to dispose fibers; and
a unit (3) configured to apply liquid for binding the powder and the fibers to at least one selected from the group consisting of the powder and the fibers.

<18> The apparatus for producing a three-dimensional object according to <17>, wherein the unit (1) and the unit (2) are a unit A1-1 configured to form a lamination unit of a powder layer containing the powder and a fiber layer containing the fibers, and the unit (3) is a unit A1-2 configured to apply liquid for binding the powder layer and the fiber layer to any region of the lamination unit.

<19> The apparatus for producing a three-dimensional object according to <17>, wherein the unit (1) and the unit (2) are a unit A2-1 configured to apply a powder-fiber mixture of the powder and the fibers on a target surface, to form a powder-fiber mixture layer, and the unit (3) is a unit A2-2 configured to apply liquid for binding at least one selected from the group consisting of between the powder and the powder, between the fibers and the fibers, and between the powder and the fibers, to any region of the powder-fiber mixture layer.

<20> The apparatus for producing a three-dimensional object according to <17>, wherein the unit (1) is a unit B1 configured to form the powder layer containing the powder, the unit (2) is a unit B2 configured to dispose a fiber-containing sheet containing the fibers, and the unit (3) is a unit B3 configured to apply, to a predetermined region, liquid for binding the powder layer and the fiber-containing sheet.

<21> The apparatus for producing a three-dimensional object according to any one of <12> to <19>, wherein the liquid includes a resin.

<22> A three-dimensional object, which is obtained by the method for producing a three-dimensional object according to any one of <1> to <11> or the apparatus for producing a three-dimensional object according to any one of <12> to <21>.

The method for producing a three-dimensional object according to any one of <1> to <16>, the apparatus for producing a three-dimensional object according to any one of <17> to <21>, and the three-dimensional object according to <22> can solve the conventionally existing problems and can achieve the object of the present disclosure.

**Claims**

1. A method for producing a three-dimensional object, the method comprising:

disposing powder;
disposing fibers; and
applying liquid for binding the powder and the fibers to at least one selected from the group consisting of the powder and the fibers.

2. The method for producing a three-dimensional object according to claim 1, wherein the disposing powder and the disposing fibers are forming a lamination unit of a powder layer containing the powder and a fiber layer containing the fibers, and
the applying is applying liquid for binding the powder layer and the fiber layer to any region of the lamination unit.

3. The method for producing a three-dimensional object according to claim 2, further comprising
drying a precursor of a three-dimensional object containing the liquid that is obtained by performing the forming and the applying, to bind the powder layer and the fiber layer.

4. The method for producing a three-dimensional object according to claim 3, further comprising
heating the precursor of the three-dimensional object dried.

5. The method for producing a three-dimensional object according to any one of claims 2 to 4,
wherein the fibers are applied on a target surface using a non-contact member that does not come into contact with the target surface, to form the fiber layer.

6. The method for producing a three-dimensional object according to claim 1,
wherein the disposing powder and the disposing fibers are applying a powder-fiber mixture of the powder and the fibers on a target surface, to form a powder-fiber mixture layer, and
the applying is applying liquid for binding at least one selected from the group consisting of between the powder and the powder, between the fibers and the fibers, and between the powder and the fibers, to any region of the powder-fiber mixture layer.

7. The method for producing a three-dimensional object according to claim 6, further comprising
drying a precursor of a three-dimensional object containing the liquid that is obtained by performing the applying the powder-fiber mixture and the applying the liquid, to bind at least one selected from the group consisting of between the powder and the powder, between the fibers and the fibers, and between the powder and the fibers.

8. The method for producing a three-dimensional object according to claim 7, further comprising
heating the precursor of the three-dimensional object dried.

9. The method for producing a three-dimensional object according to any one of claims 6 to 8,
wherein the applying the powder-fiber mixture is applying the powder-fiber mixture on the target surface using a non-contact member that does not come into contact with the target surface.

10. The method for producing a three-dimensional object according to any one of claims 6 to 9,
wherein at least one selected from the group consisting of the powder and the fibers includes a resin.

11. The method for producing a three-dimensional object according to claim 1,
wherein the disposing powder is forming a powder layer including the powder,
the disposing fibers is disposing a fiber-containing sheet that contains the fibers, and
the applying is applying liquid for binding the powder layer and the fiber-containing sheet to a predetermined region.

12. The method for producing a three-dimensional object according to claim 11, further comprising
drying a precursor of a three-dimensional object containing the liquid that is obtained by performing the forming, the disposing, and the applying, to bind the powder layer and the fiber-containing sheet.

13. The method for producing a three-dimensional object according to claim 12, further comprising
heating the precursor of the three-dimensional object dried.

14. The method for producing a three-dimensional object according to any one of claims 11 to 13,
wherein the fiber-containing sheet includes a resin and the fibers dispersed in the resin.

15. The method for producing a three-dimensional object according to any one of claims 11 to 14,
wherein the powder includes a raw material of a ceramics.

# FIG. 1

# FIG. 2

# FIG. 3

100  101

Three-dimensional object part

1

Unit A1-1 (lamination unit forming unit)

1-1

Member A1-1-1 (powder layer forming member)

Member A1-1-2 (fiber layer forming member)

1-2

Unit A1-2 (liquid applying unit)

2

Post-treatment part

3

Unit A1-3 (binding unit)

Unit A1-5 (shape exposing unit)

4

102

Unit A1-4 (heating unit)

5

# FIG. 4A

# FIG. 4B

# FIG. 4C

# FIG. 4D

# FIG. 4E

# FIG. 4F

# FIG. 4G

# FIG. 4H

65

57
51B
51A
57
51B
51A
57
51B
51A

# FIG. 4I

66

57
51A
57
51A
57
51A

# FIG. 5

S1 — 
**Step A1-1**
(laminated product forming step)

S1-1 — 
Treatment A1-1-1
(powder layer forming treatment)

↓

S1-2 — 
Treatment A1-1-2
(fiber layer forming step)

↓

S2 — 
**Step A1-2**
(liquid applying step)

↓

S3 — 
**Step A1-3**
(binding step)

↓

S4 — 
**Step A1-5**
(shape exposing step)

↓

S5 — 
**Step A1-4**
(heating step)

# FIG. 6

Step A1-1
(lamination unit forming step)

S1

S1-1

Treatment A1-1-1
(powder layer forming treatment)

S1-2

Treatment A1-1-2
(fiber layer forming step)

S2

Step A1-2
(liquid applying step)

S3

Step A1-3
(binding step)

S4

Step A1-5
(shape exposing step)

S5-1

Treatment A1-4-1
(resin decomposition treatment)

S5-2

Treatment A1-4-2
(sintering treatment)

S5

Step A1-4
(heating step)

# FIG. 7

100     101

**101 — Three-dimensional object part**

Unit A1-1 (lamination unit forming unit)

1

| Member A1-1-1 (powder layer forming member) | Member A1-1-2 (fiber layer forming member) |

1-1     1-2

Unit A1-2 (liquid applying unit)    2

**Post-treatment part**

Unit A1-3 (binding unit)    3

Unit A1-5 (shape exposing unit)    4

102

Unit A1-4-1 (resin decomposition member)

Unit A1-4-2 (sintering unit)    5-2

5-1

Unit A1-4 (heating unit)

5

# FIG. 8

S1 — Step A1-1
(lamination unit forming step)

S1-2 — Treatment A1-1-2
(fiber layer forming step)

S1-1 — Treatment A1-1-1
(powder layer forming treatment)

S2 — Step A1-2
(liquid applying step)

S3 — Step A1-3
(binding step)

S4 — Step A1-5
(shape-exposing step)

S5 — Step A1-4
(heating step)

# FIG. 9

S11 — Step A2-1 (powder-fiber mixture layer forming step)

S12 — Step A2-2 (liquid applying step)

S13 — Step A2-3 (binding step)

S14 — Step A2-5 (shape exposing step)

S15 — Step A2-4 (heating step)

# FIG. 10

200  201

Three-dimensional object part

11 — Unit A2-1 (powder-fiber mixture layer forming unit)

Unit A2-2 (liquid applying unit) — 12

Post-treatment part

13 — Unit A2-3 (binding unit)    Unit A2-5 (shape exposing unit) — 14

202 —

Unit A2-4 (heating unit) — 15

FIG. 11A

FIG. 11B

# FIG. 11C

# FIG. 11D

FIG. 11E

73

# FIG. 11F

78

71B

76

71AA

71B

76

71AA

71B

76

71AA

# FIG. 11G

79

71B

71AB

71AA

71B

71AB

71AA

71B

71AB

71AA

FIG. 11H

80

71B

71AA

71B

71AA

71B

71AA

# FIG. 12

```
S11 ──╮  ┌─────────────────────────────┐ ◄──────────╮
      └──│  Step A2-1 (powder-fiber     │            │
         │  mixture layer forming step) │            │
         └─────────────────────────────┘            │
                       │                             │
                       ▼                             │
S12 ──╮  ┌─────────────────────────────┐            │
      └──│      Step A2-2               │            │
         │   (liquid applying step)     │            │
         └─────────────────────────────┘            │
                       │                             │
                       ▼                             │
S13 ──╮  ┌─────────────────────────────┐            │
      └──│      Step A2-3               │────────────╯
         │     (binding step)           │
         └─────────────────────────────┘
                       │
                       ▼
S14 ──╮  ┌─────────────────────────────┐
      └──│      Step A2-5               │
         │   (shape exposing step)      │
         └─────────────────────────────┘
                       │
                       ▼
S15 ──╮  ┌─────────────────────────────┐
      └──│      Step A2-4               │
         │     (heating step)           │
         └─────────────────────────────┘
```

# FIG. 13

S11 — Step A2-1 (powder-fiber mixture layer forming step)

S12 — Step A2-2 (liquid applying step)

S13 — Step A2-3 (binding step)

S14 — Step A2-5 (shape exposing step)

S15-1 — Treatment A2-4-1 (resin decomposition treatment)

S15-1 — Treatment A2-4-2 (sintering treatment)

S15 — Step A2-4 (heating step)

# FIG. 14

200     201

**Three-dimensional object part**

11

Unit A2-1 (powder-fiber
mixture layer forming unit)

Unit A2-2
(liquid applying unit)    12

**Post-treatment part**

13   Unit A2-3
(binding unit)

Unit A2-5
(shape exposing unit)   14

202

Unit A2-4-1 (resin
decomposition member)

Unit A2-4-2
(sintering member)

Unit A2-4 (heating unit)

15-1                               15-2

15

# FIG. 15

S1 —— Step B1
(powder layer forming treatment)

↓

S2 —— Step B2
(fiber-containing sheet
disposing step)

↓

S3 —— Step B3
(liquid applying step)

↓

S4 —— Step B4
(binding step)

↓

S5 —— Step B6
(shape exposing step)

↓

S6 —— Step B5
(heating step)

EP 3 800 046 A1

# FIG. 16

**100** **101**

## Three-dimensional object part

**1**
Unit B1 (powder
layer forming unit)

Unit B2
(fiber-containing
sheet disposing unit)
**2**

Unit B3 (liquid
applying unit)
**3**

## Post-treatment part

**4**
Unit B4
(binding unit)

Unit B6 (shape
exposing step)
**5**

**102**

Unit B5
(heating unit)
**6**

58

## FIG. 17A

## FIG. 17B

# FIG. 17C

58

57

57A    57B

56

53

# FIG. 17D

56    57A    57B    57

53

FIG. 17E

57B

57A

51B

51A

57

56

FIG. 17F

60

59

57B

57A

57

56

53

## FIG. 17G

57A

59

51A

57

56

## FIG. 17H

62

53

# FIG. 17I

# FIG. 17J

63

57A

51B,57B

51A

57A

51B,57B

51A

57A

51B,57B

51A

FIG. 17K

# FIG. 18

S1 — Step B1
(powder layer forming treatment)

S3 — Step B3
(liquid applying step)

S2 — Step B2
(fiber-containing sheet
disposing step)

S4 — Step B4
(binding step)

S5 — Step B6
(shape exposing step)

S6 — Step B5
(heating step)

# FIG. 19

S2 — Step B2
(fiber-containing sheet
disposing step)

S1 — Step B1
(powder layer forming treatment)

S3 — Step B3
(liquid applying step)

S4 — Step B4
(binding step)

S5 — Step B6
(shape exposing step)

S6 — Step B5
(heating step)

# FIG. 20

S2 — **Step B2**
(fiber-containing sheet
disposing step)

↓

S3 — **Step B3**
(liquid applying step)

↓

S1 — Step B1
(powder layer forming treatment)

↓

S4 — **Step B4**
(binding step)

↓

S5 — **Step B6**
(shape exposing step)

↓

S6 — **Step B5**
(heating step)

# FIG. 21

S1 — Step B1
(powder layer forming treatment)

S2 — Step B2
(fiber-containing sheet
disposing step)

S3 — Step B3
(liquid applying step)

S4 — Step B4
(binding step)

S5 — Step B6
(shape exposing step)

S6 — Step B5
(heating step)

# FIG. 22

S1 — Step B1
(powder layer forming treatment)

S2 — Step B2
(fiber-containing sheet
disposing step)

S3 — Step B3
(liquid applying step)

S4 — Step B4
(binding step)

S5 — Step B6
(shape exposing step)

S6-1 — Treatment B5-1
(resin decomposition treatment)

S6-2 — Treatment B5-2
(sintering treatment)

S6 — Step B5
(heating step)

# FIG. 23

100 101

1 2

3

## Three-dimensional object part

| Unit B1 (powder layer forming unit) | Unit B2 (fiber-containing sheet disposing unit) |

| Unit B3 (liquid applying unit) |

## Post-treatment part

4 5

102

6-1 6-2

| Unit B4 (binding unit) | Unit B6 (shape exposing step) |

| Unit B5-1 (resin decomposion member) | Unit B5-2 (sintering unit) |

Unit B5 (heating unit)

6

**Europäisches Patentamt**
**European Patent Office**
**Office européen des brevets**

# EUROPEAN SEARCH REPORT

Application Number

EP 20 19 9246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/232675 A1 (JAUNET CLÉMENT [FR] ET AL) 17 August 2017 (2017-08-17) * paragraph [0231] - paragraph [0239]; claims 1-12 * | 1,6-10 | INV. B32B18/00 C04B35/80 C04B35/111 C04B35/622 |
| X | JP 2015 212060 A (SEIKO EPSON CORP) 26 November 2015 (2015-11-26) * example 2 * | 1,6-10 | C04B35/626 C04B35/628 C04B35/634 |
| Y | | 14 | B28B1/00 |
| X | WO 2019/160405 A1 (CONCR3DE B V [NL]) 22 August 2019 (2019-08-22) * claims 1,12 * | 1,6-9 | B29C64/165 |
| X | US 2013/157013 A1 (HUSON DAVID [GB] ET AL) 20 June 2013 (2013-06-20) * claims 3,15-18 * | 1,6-9 | |
| X | US 2017/278586 A1 (VAN STADEN MARTIN [US] ET AL) 28 September 2017 (2017-09-28) * paragraphs [0062], [0063], [0082]; figure 6A * | 1-9, 11-13,15 | |
| Y | | 14 | |

**TECHNICAL FIELDS SEARCHED (IPC)**

B32B
C04B
B29C
B28B

The present search report has been drawn up for all claims

| Place of search | Date of completion of the search | Examiner |
|---|---|---|
| The Hague | 25 January 2021 | Raming, Tomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 9246

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2021

| Patent document cited in search report | | Publication date | Patent family member(s) | | Publication date |
|---|---|---|---|---|---|
| US 2017232675 | A1 | 17-08-2017 | EP 3177451 A1<br>FR 3024657 A1<br>US 2017232675 A1<br>WO 2016020447 A1 | | 14-06-2017<br>12-02-2016<br>17-08-2017<br>11-02-2016 |
| JP 2015212060 | A | 26-11-2015 | JP 6500343 B2<br>JP 2015212060 A | | 17-04-2019<br>26-11-2015 |
| WO 2019160405 | A1 | 22-08-2019 | EP 3752476 A1<br>WO 2019160405 A1 | | 23-12-2020<br>22-08-2019 |
| US 2013157013 | A1 | 20-06-2013 | EP 2576167 A1<br>US 2013157013 A1<br>WO 2011154732 A1 | | 10-04-2013<br>20-06-2013<br>15-12-2011 |
| US 2017278586 | A1 | 28-09-2017 | US 2017278586 A1<br>US 2020176136 A1 | | 28-09-2017<br>04-06-2020 |

EPO FORM P0459

For more details about this annex : see Official Journal of the European Patent Office, No. 12/82

**REFERENCES CITED IN THE DESCRIPTION**

**Patent documents cited in the description**

- JP 2018204105 A
- JP 3607300 B

- JP 5088695 B

**Non-patent literature cited in the description**

- Effect of heat treatment on microstructure and mechanical properties of PIP-SiC/SiC composites. *Materials Science and Engineering: A,* 01 January 2013, vol. 559, 808-811